# FASCICULE DE BREVET EUROPEEN

(11) **EP 0 546 895 B1**
(45) Date de publication et mention de la délivrance du brevet: **02.11.1995**
(21) Numéro de dépôt: 92403260.0
(22) Date de dépôt: 03.12.1992
(51) Int. Cl.: B64C 27/72

(54) **Dispositif à vulnérabilité réduite pour la commande d'un rotor d'hélicoptère par plateaux cycliques**
Vorrichtung mit verminderter Störanfälligkeit zur Steuerung eines Hubschrauberrotors durch eine Taumelscheibe
Reduced vulnerability device to control a helicopter rotor through a swashplate

(30) Priorité: 11.12.1991 FR 9115388
(43) Date de publication de la demande: 16.06.1993
(73) Titulaire: AEROSPATIALE Société Nationale Industrielle, 75781 Paris Cédex 16 (FR)
(72) Inventeur: Lafortune, Alain Gérard, F-13127 Vitrolles (FR); Potdevin, François, F-13122 Ventabren (FR)
(74) Mandataire: Phélip, Bruno

(56) Documents cités:
- EP-A- 0 068 728
- GB-A- 2 032 374

## Description

La présente invention se rapporte à un dispositif à vulnérabilité réduite pour la commande d'un rotor d'hélicoptère par plateaux cycliques. Plus précisément, la présente invention a pour objet un dispositif de commande du plateau cyclique d'un hélicoptère par servocommandes hydrauliques autorisant le blocage ou la rupture d'une servocommande sans compromettre la sécurité de l'appareil. Cette disposition particulière des servocommandes de manoeuvre du rotor principal et des commandes associées est destinée ainsi à permettre la poursuite du pilotage de l'appareil, au cas où l'une d'entre elles serait atteinte gravement par un projectile.

Les hélicoptères militaires sont particulièrement exposés en zone ennemie et peuvent être détériorés ou neutralisés par la destruction d'une des commandes du plateau cyclique. Du fait de ce risque, les exigences militaires demandent que la commande du plateau cyclique puisse continuer normalement, dans le cas où l'une des commandes serait endommagée.

De nombreux dispositifs ont été proposés et se basent tous sur le principe d'une redondance d'unités de commandes, qui permet, au système de commande de secours, d'intervenir et de fonctionner en lieu et place de l'unité de commande défaillante.

Le brevet français FR-2 438 586 se rapporte à ce type de dispositifs de commande redondante de plateaux oscillants de rotor d'hélicoptère. Le dispositif de commande du plateau cyclique dans ce brevet comporte au moins quatre unités d'actionnement et cinq dans l'ensemble représenté sur les Figures. Chaque unité d'actionnement est constituée d'un générateur électrique et d'une pompe hydraulique associée à un vérin hydraulique commandé, pour former une unité autonome. Trois unités d'actionnement seulement sont utilisées à un instant donné, les autres étant considérées comme unités de secours passives, lesquelles peuvent devenir actives uniquement en cas de défaillance de l'une quelconque des trois premières, due essentiellement à un impact balistique. Ce brevet met ainsi en oeuvre le principe bien connu d'un système de commande du plateau cyclique par au moins quatre servocommandes, dont trois au moins sont utilisées en fonctionnement normal, et l'autre ou les autres utilisées automatiquement en secours, en cas de défaillance de l'une quelconque des trois premières. Le dispositif illustré dans ce document fait appel pour chaque unité d'actionnement à un générateur électrique qui coopère avec un vérin hydraulique et une pompe hydraulique. Cet ensemble est relativement complexe et encombrant, que ce soit pour chacune des servocommandes, pour leur ancrage ou pour la manoeuvre de débrayage. De plus, chaque unité d'actionnement doit posséder un générateur électrique avec son circuit propre.

Le but de la présente invention est de remédier aux différents inconvénients décrits ci-dessus, et de proposer un dispositif à vulnérabilité réduite pour la commande d'un rotor d'hélicoptère par plateaux cycliques, qui possède un système de secours intervenant automatiquement en cas d'anomalie sur une unité d'actionnement, de manière à ne pas faire appel à la détection et à l'intervention par le pilote, qui est seulement averti de ce qui est effectué, ce dispositif étant le plus ramassé possible afin d'être robuste et fiable.

Le dispositif à vulnérabilité réduite, selon l'invention, se rapporte à la manoeuvre d'un rotor sustentateur et propulseur d'hélicoptère, par l'intermédiaire d'un mécanisme à plateaux cycliques montés coaxialement sur l'arbre d'entraînement du rotor. Ce mécanisme à plateaux cycliques comporte un plateau tournant et un plateau non tournant, le plateau tournant est accouplé par sa partie périphérique individuellement avec une biellette de commande du pas de chaque pale du rotor, et le plateau non tournant est attelé en quatre points qui sont répartis de façon régulière à sa périphérie, à quatre servocommandes hydrauliques d'actionnement. Chaque servocommande hydraulique d'actionnement comporte un vérin de puissance, un système d'ancrage et un servodistributeur, trois des servocommandes étant utilisées en fonctionnement normal et la quatrième étant utilisée en secours, en cas de défaillance des trois autres. Chaque vérin de puissance est alimenté par un circuit hydraulique, indépendant des circuits hydrauliques des autres vérins, et qui comprend le servodistributeur manoeuvré par une entrée mécanique, relié au poste de pilotage par une timonerie ; chacun des vérins de puissance comportant un système d'ancrage débrayable. Trois des servodistributeurs ont une structure agencée, de manière à être actifs en fonctionnement normal et à bloquer le système d'ancrage de chaque vérin correspondant, et un servodistributeur a une structure agencée, de manière à être passif en fonctionnement normal et à maintenir débrayé le système d'ancrage du vérin de puissance correspondant. Chacune des entrées mécaniques de ces quatre servodistributeurs comporte un système qui, ci-dessus d'un seuil d'effort sur l'un des trois servodistributeurs normalement actifs, neutralise ce servodistributeur et initie la mise en fonctionnement du servodistributeur normalement inactif, qui devient opérationnel en fonctionnement de sauvegarde.

De façon préférée afin d'avoir des servocommandes particulièrement compactes, chaque servodistributeur est intégré au vérin de puissance correspondant, de manière à constituer un ensemble monobloc qui est constitué par le corps du servodistributeur et par le corps du vérin de puissance.

Dans chaque ensemble monobloc, chaque servodistributeur peut comporter :
- un ensemble de distribution à boucle d'asservissement entre la position du corps du vérin de puissance et la position de l'entrée mécanique correspondante ;
- un système de commutation de cette boucle d'asservissement, de manière à la mettre dans l'état opposé à celui du fonctionnement normal du dispositif de commande du plateau cyclique.

Avantageusement, la boucle d'asservissement a le retour de l'information de la position du corps du vérin de puissance, qui agit directement sur la position de l'entrée mécanique montée sur l'ensemble monobloc, au moyen d'un système de pilotage relié à l'entrée mécanique. Cet ensemble est agencé de manière qu'une modification de la position de l'entrée mécanique par rapport à l'ensemble monobloc, suite à une manoeuvre du pilote, entraîne le déplacement du corps du vérin de puissance, c'est-à-dire le déplacement de l'ensemble monobloc, jusqu'à ce que l'entrée mécanique retrouve sa position relative initiale par rapport à cet ensemble monobloc. La boucle d'asservissement est reliée à la pression d'alimentation du circuit hydraulique indépendant correspondant, et le système de pilotage est raccordé au réservoir de ce circuit indépendant ; ce système de pilotage comportant un tiroir de pilotage qui est relié à l'entrée mécanique.

Selon un agencement préféré de l'invention, chaque vérin de puissance est à section différentielle, et il comporte un piston avec une tige reliée au système d'ancrage, de manière à avoir une chambre supérieure et une chambre inférieure du côté de la tige, qui sont raccordées à la boucle d'asservissement correspondante ; afin que, lors du fonctionnement du vérin de puissance, la chambre inférieure soit toujours raccordée au circuit hydraulique sous pression.

De façon préférentielle, le système de commutation de la boucle d'asservissement comporte :
- un tiroir de by-pass du vérin de puissance monté dans la boucle d'asservissement ;
- un piston de commutation à deux positions ;
- un distributeur de commutation agissant sur le piston de commutation pour avoir les deux positions :
   . une position initiale dans laquelle le piston de commutation coopère avec le tiroir de by-pass, afin d'obtenir le fonctionnement normal du servodistributeur du vérin de puissance correspondant ;
   . une position de secours dans laquelle le piston de commutation coopère avec le tiroir de by-pass, afin d'obtenir le fonctionnement de sauvegarde du servodistributeur du vérin de puissance correspondant.

Avantageusement, le tiroir de by-pass est monté sur le canal d'alimentation de la boucle d'asservissement, et il est raccordé au réservoir de manière à ce que ce tiroir de by-pass ait au moins deux positions :
- une position correspondant à la boucle d'asservissement sans pression,
- une position de fonctionnement du servodistributeur correspondant à la boucle d'asservissement sous pression.

De plus, le piston de commutation est bloqué dans la position de secours par un verrou additionnel.

Afin de bien s'adapter à la structure de la servocommande décrite précédemment, l'entrée mécanique est avantageusement munie d'un verrou qui est porté par le tiroir de by-pass. De plus, le tiroir de pilotage et le distributeur de commutation appartiennent à la même pièce, qui est le levier de pilotage relié à l'entrée mécanique constituée par un levier d'entrée. Ce levier d'entrée est de préférence monté sous le corps du servodistributeur par l'intermédiaire d'une articulation qui est disposée à l'une de ses extrémités, l'autre extrémité recevant le mouvement d'entrée par l'intermédiaire du système correspondant, et le levier de pilotage étant relié au levier d'entrée par une articulation disposée entre l'entrée de mouvement et l'articulation du montage de ce levier d'entrée. Le levier d'entrée coopère avec deux butées, une butée haute et une butée basse qui sont solidaires du corps du servodistributeur. Enfin, le levier d'entrée peut comporter un logement qui est aménagé du côté supérieur de l'articulation de montage, ce logement recevant le verrou porté par le tiroir de by-pass qui vient bloquer le levier d'entrée. Plus précisément, ce logement et ce verrou ont un profil conjugué de forme sensiblement tronconique. L'articulation de montage du levier d'entrée est supportée par deux oreilles qui sont aménagées sous le corps du servodistributeur.

Afin de pouvoir permettre un fonctionnement correct du dispositif de l'invention, le levier de pilotage peut comporter, à l'extrémité opposée au levier d'entrée, un système de rappel élastique. Ce système de rappel élastique est constitué, dans un premier mode de réalisation, par un ressort de compression monté entre le corps du servodistributeur et l'extrémité du levier de pilotage. Dans un deuxième mode de réalisation, le système de rappel élastique est constitué par un ressort de compression monté sur une tige du levier de pilotage entre deux rondelles disposées à chacune de ses extrémités et tenues par une collerette, une rondelle s'appliquant sur un appui du corps du servodistributeur, et une rondelle s'appliquant sur un autre appui de ce corps.

Enfin, le levier de pilotage peut comporter un amortisseur qui devient efficace après une certaine course de celui-ci, de manière à l'empêcher d'aller vers ses positions extrêmes en cas de manoeuvre rapide.

Selon un mode de réalisation préférentiel de l'invention, chacun des trois servodistributeurs actifs en fonctionnement normal comporte :
- un tiroir de pilotage monté sur le levier de pilotage et entouré d'une chambre annulaire avec une chambre inférieure et une chambre supérieure situées de part et d'autre du tiroir de pilotage ;
- un tiroir de by-pass avec une tige sur laquelle est monté un ressort qui s'appuie d'une part sur ce tiroir et d'autre part sur le piston de commutation, et qui est disposé dans une chambre, l'autre extrémité du tiroir de by-pass ayant un chanfrein, et venant en contact avec le corps sous l'action du ressort, une chambre annulaire étant disposée autour de ce tiroir qui possède un canal débouchant dans la chambre ;
- la boucle d'asservissement ayant un canal qui relie la chambre supérieure du vérin de puissance à la chambre annulaire, reliée elle-même par un autre canal à la chambre annulaire du pilotage, et un canal reliant la chambre inférieure du vérin de puissance au tiroir de by-pass qui est relié par un autre canal à la chambre inférieure du pilotage ;
- un canal est relié à l'alimentation du circuit hydraulique et à un autre canal qui aboutit au tiroir de by-pass ;
- un canal est relié au retour du réservoir aboutissant dans la chambre supérieure du pilotage qui est reliée par un canal à la chambre du tiroir de by-pass ;
   de manière que, lorsque le circuit hydraulique est sous pression, le tiroir de by-pass se déplace sous l'action de la pression du canal de liaison pour mettre en communication la chambre inférieure du vérin de puissance avec la chambre inférieure du pilotage par l'intermédiaire des canaux correspondants, qui sont reliés alors aux canaux d'alimentation sous pression, et que, sous l'action d'un déplacement du levier de pilotage, le tiroir de pilotage se déplace pour mettre en communication la chambre supérieure du vérin avec la chambre inférieure de ce vérin ou avec la chambre supérieure du pilotage suivant le sens du déplacement du levier, afin que le corps du vérin se déplace jusqu'au retour à la position d'équilibre du tiroir de pilotage.

Chacun des trois servodistributeurs actifs en fonctionnement normal peut comporter de plus :
- un tiroir de commutation qui est monté sur le levier de pilotage avec une chambre inférieure et une chambre supérieure situées de part et d'autre du tiroir de commutation ;
- un piston de commutation monté dans le corps et dans le prolongement du tiroir de by-pass, de manière que le ressort de ce tiroir s'appuie sur ce piston ;
- un système de canaux reliant le fond du piston de commutation à la chambre inférieure et à la chambre supérieure ainsi qu'à l'alimentation ;
   de manière que, lorsque le levier de pilotage se déplace vers le haut ou vers le bas d'une valeur supérieure à la valeur admise, il mette en communication l'une des chambres de pilotage avec l'alimentation, celle-ci étant alors envoyée par le canal correspondant sur le piston de commutation, qui se déplace pour se mettre en position de secours et repousse le tiroir de by-pass qui met alors en communication les chambres du vérin de puissance avec le retour au réservoir, par le système de canaux correspondants.

De plus, un canal de liaison muni d'un étranglement peut relier le canal de retour au réservoir et le canal d'alimentation du vérin de commutation. Afin d'améliorer encore le fonctionnement de la commutation, l'extrémité du piston de commutation peut comporter un embrèvement constituant une chambre d'extrémité. Un verrou additionnel peut être monté perpendiculairement à l'axe du piston de commutation, et il est alors poussé par un ressort, de manière à pouvoir venir s'engager dans une gorge aménagée dans le piston de commutation.

Enfin, chaque servodistributeur actif en fonctionnement normal comporte de préférence un tiroir d'amortisseur, qui est monté sur le levier de pilotage avec une collerette séparant une chambre inférieure d'une chambre supérieure, qui sont raccordées l'une et l'autre au canal d'alimentation par un système de canaux, la collerette possédant au moins un étranglement qui relie les deux chambres.

Selon un mode préférentiel de l'invention, le servodistributeur passif en fonctionnement normal comporte :
- un tiroir de pilotage qui est monté sur le levier de pilotage et qui est entouré d'une chambre annulaire, avec une chambre inférieure et une chambre supérieure situées de part et d'autre du tiroir de pilotage ;
- un tiroir de by-pass avec une tige sur laquelle est monté un ressort qui s'appuie d'une part sur ce tiroir et d'autre part sur le corps, et qui est disposé dans une chambre, l'autre extrémité du tiroir de by-pass ayant un chanfrein, et venant en contact avec le corps sous l'action du ressort, une chambre annulaire étant disposée autour de ce tiroir qui possède un canal débouchant dans la chambre ;
- la boucle d'asservissement ayant :
   . un canal qui relie la chambre supérieure du vérin à la chambre annulaire du tiroir de by-pass, reliée elle-même par un canal à la chambre annulaire de pilotage ;
   . et un canal reliant la chambre inférieure du vérin au tiroir de by-pass, qui est relié par un canal à la chambre inférieure du pilotage ;
- des canaux reliés à l'alimentation du circuit hydraulique qui aboutissent au tiroir de by-pass, la chambre du tiroir de by-pass étant reliée par un système de canaux au retour au réservoir en passant par la chambre supérieure de pilotage ;
   de manière que lorsque le circuit hydraulique est sous pression, le tiroir de by-pass se déplace sous l'action de la pression du canal d'alimentation, tout en laissant les chambres supérieure et inférieure du vérin de puissance reliées au retour au réservoir, afin que le servodistributeur passif reste inopérant.

De plus, le servodistributeur passif en fonctionnement normal comporte :
- un tiroir de commutation qui est monté sur le levier de pilotage avec une chambre centrale et deux portées : une portée inférieure et une portée supérieure situées de part et d'autre de cette chambre centrale ;
- un piston de commutation monté dans le corps et dans le prolongement du tiroir de by-pass ;
- des canaux reliant le fond du piston de commutation à la chambre centrale du tiroir de commutation qui est relié lui-même par d'autres canaux à l'alimentation sous pression, qui agit sur le piston de commutation, pour le maintenir en position basse initiale, un système de canaux raccordé au retour au réservoir aboutissant aux portées inférieure et supérieure du tiroir de commutation ;
   de manière que, lorsque le levier de pilotage se déplace vers le haut ou vers le bas, d'une valeur supérieure à la valeur admise, il mette en communication la chambre centrale de commutation avec l'un des canaux reliés au retour au réservoir, le piston de commutation peut alors se déplacer sous l'action du tiroir de by-pass poussé par la pression pour se mettre en position de secours, ce tiroir de by-pass met de ce fait en communication la chambre inférieure du vérin de puissance avec la chambre inférieure du tiroir de pilotage par les canaux correspondants, qui sont ainsi reliés à l'alimentation, et le tiroir de by-pass supprime la liaison avec le retour au réservoir de la chambre supérieure du vérin de puissance, ce qui permet au servodistributeur passif de devenir opérationnel.

Afin d'améliorer le fonctionnement de ce servodistributeur passif en fonctionnement normal, l'extrémité du piston de commutation peut comporter un embrèvement constituant une chambre d'extrémité. De plus, un verrou additionnel peut être monté perpendiculairement à l'axe du piston de commutation, ce verrou additionnel étant alors poussé par un ressort, de manière à pouvoir venir s'engager dans une gorge aménagée dans le piston de commutation. Enfin, le servodistributeur passif en fonctionnement normal peut comporter un tiroir d'amortissement, qui est monté sur le levier de pilotage avec une collerette séparant une chambre inférieure d'une chambre supérieure, qui sont raccordées l'une et l'autre à l'alimentation par un système de canaux, la collerette possédant au moins un étranglement reliant les deux chambres l'une à l'autre.

Avantageusement, chaque servocommande du dispositif, selon l'invention, comporte un système d'ancrage qui est constitué par un vérin d'ancrage ayant des moyens de liaison avec le vérin de puissance et dont le circuit hydraulique est relié à la chambre inférieure de ce vérin de puissance, le vérin d'ancrage étant lié à un élément de la structure de l'hélicoptère par des moyens d'accrochage.

Plus précisément, ce vérin d'ancrage comporte un corps avec une tige portant deux pistons qui coulissent dans ce corps et qui déterminent, avec cette tige et ce corps, une chambre.

Avantageusement, selon l'invention, la tige du vérin de puissance et la tige du vérin d'ancrage sont une seule et même pièce qui constituent les moyens de liaison du vérin d'ancrage avec le vérin de puissance. D'autre part, le circuit hydraulique d'alimentation du vérin d'ancrage est constitué par un canal, qui est aménagé dans les tiges du vérin de puissance et du vérin d'ancrage, de manière à relier directement la chambre du vérin d'ancrage à la chambre inférieure du vérin de puissance. De plus, les deux pistons du vérin d'ancrage sont tenus sur la tige d'une part par une collerette, et d'autre part par une autre collerette d'extrémité, qui appartiennent l'une et l'autre à cette tige, un ressort repoussant les deux pistons l'un par rapport à l'autre pour les maintenir en place, un des pistons s'appliquant contre un appui du corps du vérin d'ancrage et l'autre piston s'appliquant contre le bord de ce corps.

Dans le mode de réalisation préféré de l'invention, les moyens d'accrochage du vérin d'ancrage comportent une articulation qui est raccordée d'une part à un élément de la structure de l'hélicoptère, et d'autre part au fond du corps de ce vérin d'ancrage.

La présente invention a ainsi pour objet un dispositif à vulnérabilité réduite pour la commande d'un rotor d'hélicoptère par plateaux cycliques, dont le plateau non tournant est attelé à quatre servocommandes hydrauliques d'actionnement. Chaque servocommande hydraulique comporte un vérin de puissance relié à un système d'ancrage et commandé par un servodistributeur. Dans ce dispositif, selon l'invention, 'trois servocommandes hydrauliques d'actionnement sont actives en fonctionnement normal, tandis que la quatrième servocommande est en secours. Chaque servocommande hydraulique d'actionnement est alimentée par une génération hydraulique indépendante, et le servodistributeur forme avec le vérin de puissance correspondant un ensemble monobloc qui a un ancrage débrayable ; les trois servocommandes actives ayant leur ancrage bloqué, tandis que la quatrième servocommande de secours a son ancrage qui est débrayé.

L'architecture propre à l'invention permet, dans des modes préférés, d'avoir des servocommandes monoblocs ou à simples corps, qui sont donc moins encombrantes, moins chères et moins lourdes que des servocommandes à corps séparés. De plus, les circuits hydrauliques étant affectés chacun à une servocommande, une panne ou un endommagement de l'un ou de l'autre de ces circuits n'a pas d'effet sur les autres agencements servocommande-circuit hydraulique. Ces servocommandes présentent de plus l'avantage d'être reliées directement aux dispositifs d'ancrage hydrauliques, contrairement aux systèmes d'ancrage électriques, qui nécessitent des détections et des commandes particulières pour synchroniser l'embrayage et le débrayage des ancrages et des servocommandes.

L'invention peut aussi permettre d'avoir des détections et des conversions automatiques, sans aucune intervention du pilote qui est seulement averti de ce qui est effectué. De plus la détection du blocage ou du départ en butée d'une servocommande peut se faire par détection d'effort sur le levier d'entrée. Ceci est possible du fait qu'il y a trois servocommandes actives, car l'effort n'apparaît que sur celle qui est en cause. Avec quatre servocommandes actives, l'effort apparaît aussi sur la servocommande qui lui est opposée, et de ce fait, l'utilisation de quatre servocommandes actives n'est pas applicable au système de l'invention.

D'autres avantages ressortiront de l'invention qui sera mieux comprise à l'aide de la description donnée ci-dessous d'exemples particuliers de réalisation, décrits à titre non limitatif, en référence aux dessins annexés sur lesquels :
- la Figure 1 est une vue schématique en perspective de l'ensemble du dispositif à vulnérabilité réduite pour la commande d'un rotor d'hélicoptère par plateaux cycliques, selon l'invention, avec quatre unités d'actionnement ;
- la Figure 2 est une vue en perspective de l'adaptation des timoneries classiques pour la commande en tangage et en roulis des quatre unités d'actionnement, selon l'invention ;
- la Figure 3 est une vue générale en coupe suivant l'axe des vérins et des tiroirs d'une servocommande active en fonctionnement normal, le circuit hydraulique étant sans pression ;
- la Figure 4 est une vue générale en coupe suivant l'axe des vérins et des tiroirs d'une servocommande passive en fonctionnement normal, ce circuit hydraulique étant sans pression ;
- la Figure 5 est une vue analogue à la Figure 3, le circuit hydraulique étant sous pression, ce qui correspond à la position embrayée en fonctionnement normal ;
- la Figure 6 est une Figure analogue à la Figure 3, le circuit hydraulique étant sous pression, et les différents éléments étant en phase de débrayage au moment de la panne ;
- la Figure 7 est une Figure analogue à la Figure 3, le circuit hydraulique étant sous pression, et les différents éléments étant en phase débrayée après la panne ;
- la Figure 8 est une vue analogue à la Figure 4, le circuit hydraulique étant sous pression, ce qui correspond à la position débrayée en fonctionnement normal ;
- la Figure 9 est une Figure analogue à la Figure 4, le circuit hydraulique étant sous pression, et les différents éléments étant en phase d'embrayage au moment de la panne ;
- la Figure 10 est une Figure analogue à la Figure 4, le circuit hydraulique étant sous pression, et les différents éléments étant embrayés après la panne.

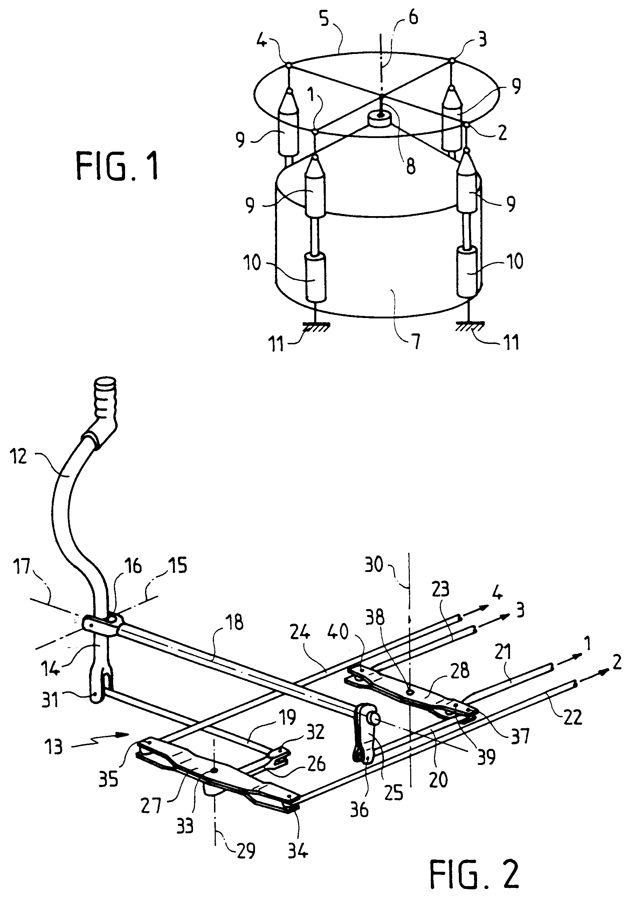

Le dispositif à vulnérabilité réduite pour la commande d'un rotor d'hélicoptère par plateaux cycliques est représenté schématiquement en perspective sur la Figure 1. Le dispositif à vulnérabilité réduite pour la manoeuvre d'un rotor sustentateur et propulseur d'hélicoptère se fait par l'intermédiaire d'un mécanisme à plateaux cycliques, qui sont montés coaxialement sur l'arbre d'entraînement du rotor 6. Le mécanisme à plateaux cycliques comprend un plateau tournant et un plateau non tournant ; le plateau tournant est accouplé par sa partie périphérique individuellement avec une biellette de commande du pas de chaque pale du rotor, et le plateau non tournant 5 est attelé en quatre points 1, 2, 3, 4, qui sont répartis de façon régulière à sa périphérie, à quatre servocommandes hydrauliques d'actionnement. Chaque servocommande hydraulique d'actionnement comporte un vérin de puissance 9, un système d'ancrage 10 et un servodistributeur 41, 42. Ces servocommandes hydrauliques d'actionnement sont disposées à la périphérie de la boîte de transmission principale 7 de l'hélicoptère et chaque système d'ancrage 10 est monté sur un élément 11 de la structure de l'hélicoptère.

Selon l'invention, trois des servocommandes sont utilisées en fonctionnement normal, et la quatrième est utilisée en secours en cas de défaillance d'une des trois autres, de manière que le pilotage soit toujours assuré par trois servocommandes.

La timonerie, référencée 13 dans son ensemble, de commande est agencée de manière à assurer les déplacements des trois servocommandes normalement actives, ainsi que les déplacements de la quatrième servocommande normalement passive, pour commander le basculement du plateau cyclique commandant le rotor en tangage et en roulis. La timonerie 13 comporte un manche cyclique 12, qui est disposé dans le poste de pilotage et qui est monté sur une articulation 16, de manière à pouvoir pivoter de gauche à droite pour la commande des mouvements de roulis, et d'avant en arrière pour la commande des mouvements de tangage. Ces différents mouvements se font grâce à l'articulation 16 autour d'un axe 15 de pivotement longitudinal pour les mouvements de gauche à droite de roulis, et autour d'un axe 17 de pivotement transversal pour les mouvements d'avant en arrière de tangage. L'articulation 16 est disposée à la partie inférieure du manche cyclique 12, qui se prolonge en dessous de cette articulation 16 par un levier 14. Un arbre de raccordement 18 est monté le long de l'axe de pivotement transversal et se termine par une fourche qui reçoit le manche cyclique 12 avec son articulation 16. Une biellette de raccordement 19 a une de ses extrémités qui est montée par une articulation 31 à l'extrémité inférieure en forme de fourche du levier 14. L'arbre de raccordement 18 comporte à son autre extrémité un levier 25 qui est muni d'une articulation 36, afin de recevoir l'extrémité d'une biellette de raccordement 20. Cette biellette de raccordement 20 est elle-même raccordée à son autre extrémité par une articulation 37 à un palonnier 28, qui tourne autour d'un axe de pivotement 30 par une articulation 38. Ce palonnier 28 est muni à chacune de ses extrémités, d'une part d'une articulation 39 sur laquelle est montée l'extrémité de la tringlerie 21 pour la commande du point 1, et d'autre part à son autre d'extrémité d'une articulation 40 pour la commande de la tringlerie 23 du point 3. La biellette de raccordement 19, qui est montée sur l'extrémité du levier 14 par l'articulation 31, a son autre extrémité qui est montée au moyen d'une articulation 32 sur la fourche d'un levier 26, qui tourne autour d'un axe de pivotement 29 sur lequel est monté un palonnier 27 par l'intermédiaire d'une articulation 33. Ce palonnier 27 comporte à chacune de ses extrémités, d'une part une articulation 34 sur laquelle est montée l'extrémité de la tringlerie 22 pour la commande du point 2, et d'autre part à son autre extrémité, il est muni d'une articulation 35 sur laquelle est montée l'extrémité de la tringlerie 24 de commande du point 4.

Les mouvements de commande du manche cyclique 12 de gauche à droite pour le roulis entraînent des mouvements opposés de l'articulation 31 du levier 14, ce qui déplace le long de son axe la biellette de raccordement 19, entraînant ainsi en rotation par rapport à l'axe de pivotement 29 l'extrémité du levier 26 et donc la rotation du palonnier 27, c'est-à-dire le déplacement le long de leurs axes des tringleries 22 et 24 de commande des points 2 et 4. Les mouvements de commande d'avant en arrière du manche cyclique 12 pour les mouvements de tangage font tourner autour de son axe l'arbre de raccordement 18, qui entraîne en rotation le levier 25 et déplace le long de son axe la biellette de raccordement 20, qui à son tour commande en rotation autour de l'axe de pivotement 30 le palonnier 28, qui entraîne le long de leurs axes les tringleries 21 et 22 de commande des points 1 et 3.

Dans la suite de a description, on entend par servocommande l'ensemble de chacun des quatres mécanismes attelés au plateau cyclique non tournant 5. Chacune de ces servocommandes comporte :
- un vérin de puissance 9,
- un système d'ancrage 10 dudit vérin de puissance 9,
- un servodistributeur, référencé 41 ou 42 suivant le cas, qui est alimenté en fluide hydraulique sous pression et dans lequel s'introduit la commande mécanique d'entrée.

Chacune des tringleries 21, 22, 23 et 24 sont reliées respectivement à la commande mécanique d'entrée de la servocommande correspondante aux points 1, 2, 3 et 4 du plateau non tournant 5.

La commande de pas collectif qui, par des tringleries adéquates, transmet les déplacements du levier de pas collectif simultanément et pour les mêmes valeurs aux entrées mécaniques des quatre servocommandes, n'a pas été représentée, car réalisée de façon classique et bien connue.

Le dispositif à vulnérabilité réduite pour la manoeuvre d'un rotor sustentateur et propulseur d'hélicoptère comporte essentiellement :
- quatre générations hydrauliques alimentant chacune une servocommande,
- les servocommandes sont à simple corps avec un ancrage débrayable,
- trois servocommandes sont actives avec leurs ancrages bloqués,
- une quatrième servocommande est passive, c'est-à-dire qu'elle est en by-pass avec son ancrage maintenu par un seuil,
- l'entrée mécanique des servocommandes actives comporte un système qui, au-dessus d'un seuil d'effort, déclenche :
   . la mise en by-pass du vérin de puissance 9,
   . le débrayage de l'ancrage 10,
- l'entrée mécanique de la servocommande passive comporte un système qui, au-dessus d'un seuil d'effort, déclenche :
   . la mise en fonctionnement de la servocommande,
   . le blocage de l'ancrage 10.

Ainsi, selon l'invention :
- chaque vérin de puissance 9 est alimenté par un circuit hydraulique, indépendant des circuits des autres vérins de puissance 9, ce circuit hydraulique comprenant le servodistributeur 41 ou 42 suivant le cas, qui est manoeuvré par une entrée mécanique et relié au poste de pilotage par la timonerie (13) et la timonerie de pas collectif non représentée ;
- chaque vérin de puissance 9 comporte un système d'ancrage débrayable ;
- les trois servodistributeurs 41 ont une structure agencée, de manière à être actifs en fonctionnement normal et à bloquer le système d'ancrage de chaque vérin de puissance 9 correspondant, et le servodistributeur 42 a une structure agencée, de manière à être passif en fonctionnement normal et à maintenir débrayé le système d'ancrage du vérin de puissance 9 correspondant ;
- chacune des entrées mécaniques de ces quatre servodistributeurs 41, 42 comporte un système qui, au-dessus d'un seuil d'effort sur l'un des trois servodistributeurs 41 normalement actifs, neutralise ce servodistributeur et initie la mise en fonctionnement du servodistributeur 42 normalement inactif, qui devient opérationnel en fonctionnement de sauvegarde.

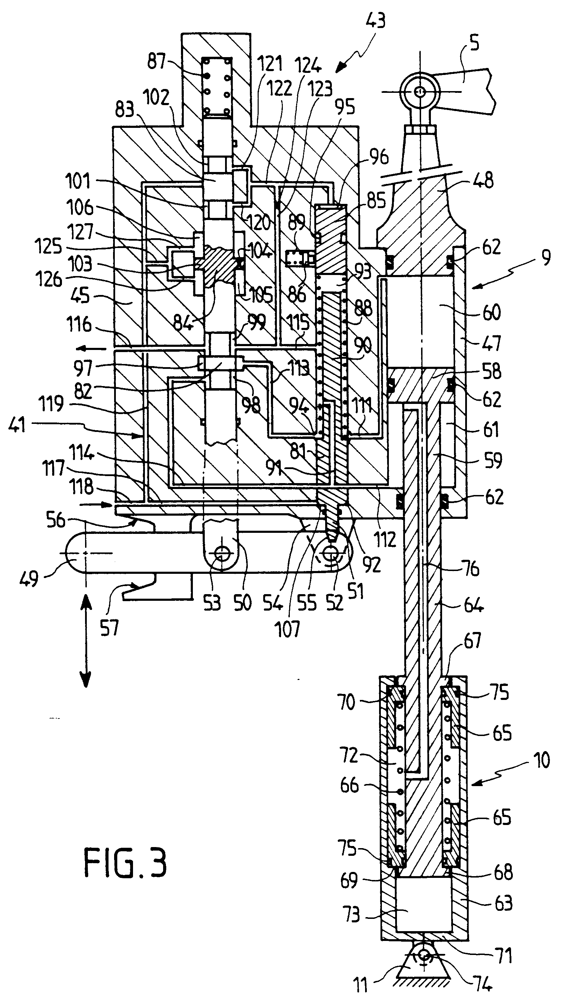

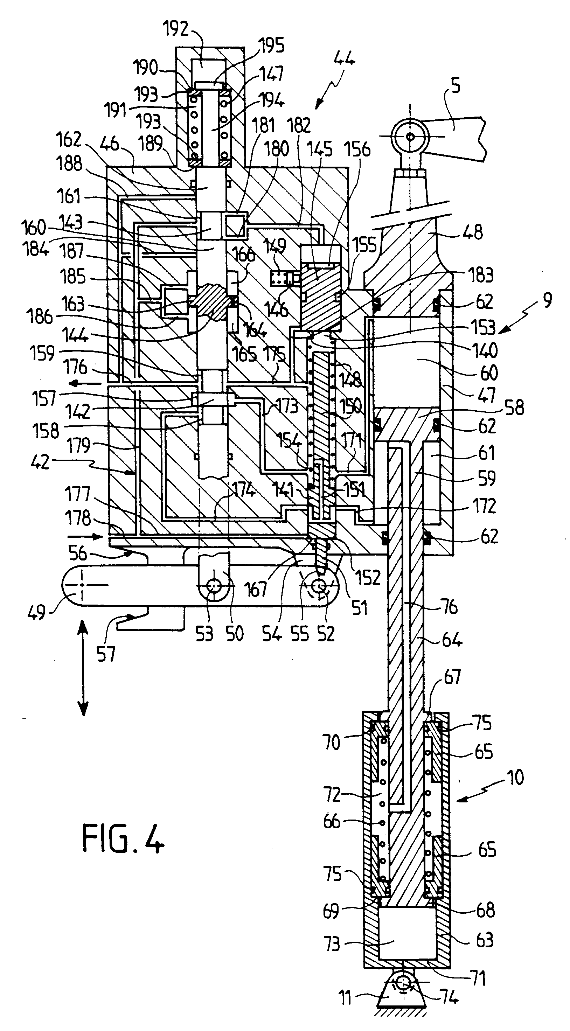

La Figure 3 représente l'ensemble d'une servocommande normalement active et la Figure 4 représente la servocommande normalement passive, l'une et l'autre de ces servocommandes ayant leurs circuits hydrauliques non alimentés, c'est-à-dire sans pression, qui correspondent à l'hélicoptère au sol. Chaque servocommande normalement active comporte un servodistributeur 41 qui alimente un vérin de puissance 9 raccordé à un vérin d'ancrage 10, l'entrée mécanique étant constituée par un levier d'entrée 49. Le servodistributeur 41 est intégré au vérin de puissance 9, de manière que le corps 45 du servodistributeur 41 et le corps 47 du vérin de puissance 9 constituent un seul ensemble monobloc 43 sur lequel est monté le levier d'entrée 49. De la même manière, la servocommande passive est constituée par le servodistributeur 42, le vérin de puissance 9 et le vérin d'ancrage 10 correspondants, l'entrée mécanique étant constituée par un levier d'entrée 49. Le servodistributeur 42 est intégré au vérin de puissance 9, de manière que le corps 46 du servodistributeur 42 et le corps 47 du vérin de puissance 9 constituent un seul ensemble monobloc 44 sur lequel est monté le levier d'entrée 49. Ainsi, selon les modes de réalisation représentés sur les Figures 3 et 4, les vérins de puissance 9, les vérins d'ancrage 10 et les systèmes d'entrée mécanique avec le levier d'entrée 49 sont identiques, alors que les servodistributeurs 41 et 42 ont un circuit hydraulique et des éléments qui leur sont propres.

Chacun des servodistributeurs 41, 42 comporte :
- un ensemble de distribution à boucle d'asservissement entre la position du corps 47 du vérin de puissance 9 et la position de l'entrée mécanique correspondante ;
- un système de commutation de cette boucle d'asservissement, de manière à la mettre dans l'état opposé à celui du fonctionnement normal du dispositif de commande du plateau non tournant 5 des plateaux cycliques.

La boucle d'asservissement établit un lien entre la position du corps 47 du vérin de puissance 9, c'est-à-dire la position de l'ensemble monobloc correspondant 43, 44, et la position de l'entrée mécanique qui est montée sur cet ensemble monobloc 43, 44 par un système de pilotage relié à l'entrée mécanique. La boucle d'asservissement a ainsi le retour de l'information de la position du corps 47 du vérin de puissance 9, qui agit directement sur la position de l'entrée mécanique montée sur l'ensemble monobloc correspondant 43, 44 au moyen du système de pilotage relié à l'entrée mécanique. De ce fait, toute modification de la position de l'entrée mécanique par rapport à l'ensemble monobloc 43, 44, suite à une manoeuvre du pilote, entraîne le déplacement du corps 47 du vérin de puissance 9, c'est-à-dire qu'il entraîne le déplacement de l'ensemble monobloc correspondant 43, 44, jusqu'à ce que l'entrée mécanique retrouve sa position relative initiale par rapport à cet ensemble monobloc 43, 44.

Pour ce faire, la boucle d'asservissement est reliée à la pression d'alimentation du circuit hydraulique indépendant correspondant, et le système de pilotage est raccordé au réservoir de ce circuit indépendant et il comporte un tiroir de pilotage 82, 142 qui est relié à l'entrée mécanique correspondante.

Chaque vérin de puissance 9 est à section différentielle, et il comporte un piston 58 avec une tige 59 reliée au système d'ancrage. Ainsi, le vérin a une chambre supérieure 60 et une chambre inférieure 61 situées du côté de la tige 59. La chambre supérieure 60 et la chambre inférieure 61 sont l'une et l'autre raccordées à la boucle d'asservissement, de manière que, lors du fonctionnement du vérin de puissance 9, la chambre inférieure 61 soit toujours raccordée au circuit hydraulique sous pression.

Chaque système d'ancrage comporte un vérin d'ancrage 10 qui a des moyens de liaison avec le vérin de puissance 9 correspondant. Chaque vérin d'ancrage 10 est lié à un élément 11 de la structure de l'hélicoptère par des moyens d'accrochage. De plus, selon une particularité de l'invention, le vérin d'ancrage a son circuit hydraulique qui est relié à la chambre inférieure 61 du vérin de puissance 9 correspondant.

Le vérin d'ancrage 10 comporte un corps 63 et une tige 64 portant deux pistons référencés 65, qui coulissent dans le corps 63 et qui déterminent, avec la tige 64 et le corps 63, une chambre 72. La tige 64 du vérin d'ancrage 10 et la tige 59 du vérin de puissance 9 correspondant forment une seule et même pièce qui constitue les moyens de liaison de ce vérin d'ancrage 10 avec le vérin de puissance 9. Les deux pistons 65 sont tenus sur la tige 64 par une collerette 67 située dans la direction du vérin de puissance 9, et par une autre collerette d'extrémité 68 qui appartiennent l'une et l'autre à la tige 64. De plus, un ressort 66 est monté sur cette tige 64 entre les deux pistons 65, de façon à repousser ces deux pistons l'un par rapport à l'autre pour les maintenir en place, de manière qu'un piston 65 s'applique contre un appui 69 aménagé dans le fond à l'intérieur du corps 63, et que l'autre piston 65 s'applique contre le bord 70 de ce corps 63 situé du côté opposé, c'est-à-dire du côté du vérin de puissance 9. Ainsi, le corps 63 du vérin d'ancrage 10 comporte un appui 69, qui détermine à la partie inférieure de ce vérin d'ancrage 10 une chambre de débattement 73 permettant le déplacement de la tige 64 à l'intérieur du corps 63. Les moyens d'accrochage de ce vérin d'ancrage 10 sont montés en dessous du fond 71 du corps 63 et sont constitués par une articulation 74, qui est raccordée d'une part à l'élément 11 de la structure de l'hélicoptère, et d'autre part au fond 71 du corps 63.

Le circuit hydraulique d'alimentation du vérin d'ancrage 10 est constitué par un canal 76 qui est aménagé dans la tige 59 du vérin de puissance 9 et dans la tige 64 du vérin d'ancrage 10, de manière à relier directement la chambre 72 du vérin d'ancrage 10 à la chambre inférieure 61 du vérin de puissance 9.

Afin d'assurer l'étanchéité du circuit hydraulique du vérin d'ancrage 10, chacun des deux pistons 65 possède des joints d'étanchéité 75 disposés à l'intérieur et à l'extérieur de ces pistons, c'est-à-dire en contact respectivement avec la tige 64, et avec le corps 63.

Chaque vérin de puissance 9 est fermé à sa partie supérieure par une attache 48 qui est raccordée au point correspondant de la périphérie du plateau non tournant 5. Afin d'assurer l'étanchéité de ce vérin de puissance 9, des joints 62 sont disposés à la partie inférieure du corps 47 pour coopérer avec la tige 59, dans le piston 58 et dans l'attache 48, pour s'appliquer dans les parois internes du corps 47.

Le système de commutation de la boucle d'asservissement de chacune des servocommandes comporte :
- un tiroir de by-pass 81, 141 du vérin de puissance 9 qui est monté dans cette boucle d'asservissement ;
- un piston de commutation 85, 145 qui a deux positions ;
- un distributeur de commutation 83, 143 agissant sur le piston de commutation 85, 145 pour avoir les deux positions :
   . une position initiale dans laquelle le piston de commutation 85, 145 coopère avec le tiroir de by-pass 81, 141, afin d'obtenir le fonctionnement normal du servodistributeur du vérin de puissance 9 correspondant ;
   . une position de secours dans laquelle le piston de commutation 85, 145 coopère avec le tiroir de by-pass 81, 141, afin d'obtenir le fonctionnement de sauvegarde du servodistributeur 41, 42 du vérin de puissance 9 correspondant.

Le système de commutation coopère avec la boucle d'asservissement au moyen du tiroir de by-pass 81, 141 qui est monté sur le canal d'alimentation 117, 118 ; 177, 178 de la boucle d'asservissement et qui est raccordé à une source de fluide hydraulique sous pression, de manière à ce que ce tiroir de by-pass 81, 141 ait au moins deux positions :
- une position correspondant à la boucle d'asservissement sans pression,
- une position correspondant à la boucle d'asservissement sous pression.

Le piston de commutation 85, 145 est bloqué dans la position de secours par un verrou additionnel, référencés respectivement 86, 146.

Dans les réalisations représentées sur les Figures 3, 4, l'entrée mécanique est munie d'un verrou 51 qui est porté par le tiroir de by-pass 81, 141, qui peut agir ainsi sur l'entrée mécanique. De plus, le tiroir de pilotage 82, 142 et le distributeur de commutation correspondant appartiennent à la même pièce qui est un levier de pilotage 50 relié à l'entrée mécanique constituée par le levier d'entrée 49.

Chaque entrée mécanique est constituée par le levier d'entrée 49 qui est monté sous le corps 45, 46 du servodistributeur correspondant 41, 42. Ce levier d'entrée 49 est monté par l'intermédiaire d'une articulation 52, qui est disposée à l'une des extrémités de ce levier 49. L'autre extrémité du levier 49 reçoit le mouvement d'entrée par l'intermédiaire du système correspondant, et le levier de pilotage 50 est relié au levier d'entrée 49 par une articulation 53, qui est disposée entre l'entrée de mouvement et l'articulation 52 du montage de ce levier d'entrée 49. Le levier d'entrée 49 est placé entre deux butées : une butée haute 56 et une butée basse 57 qui sont solidaires et fixés en dessous du corps 45, 46 du servodistributeur correspondant 41, 42. L'articulation 52 assurant le montage du levier d'entrée 49 est supportée par deux oreilles 54, qui sont aménagées sous le corps 45, 46 du servodistributeur correspondant 41, 42. De plus, le levier d'entrée 49 comporte un logement 55 qui est aménagé du côté supérieur de l'articulation 52 de montage, afin de recevoir le verrou 51 porté par le tiroir de by-pass 81, 141 afin de venir bloquer le levier d'entrée 49. Ce logement 55 et le verrou 51 ont un profil conjugué de forme sensiblement tronconique.

Enfin, chacun des servodistributeurs 41, 42 comporte un amortisseur qui est monté sur le levier de pilotage 50. Cet amortisseur ne devient efficace qu'après une certaine course du levier de pilotage, et il est destiné à l'empêcher daller vers ses positions extrêmes en cas de manoeuvre rapide, mais brève, du levier d'entrée. Le levier de pilotage 50 comporte en plus un système de rappel élastique qui est disposé à l'extrémité de ce levier de pilotage 50, du côté opposé au levier d'entrée 49.

Comme on peut le voir sur la Figure 3, chacun des trois servodistributeurs actifs 41 en fonctionnement normal comporte :
- un tiroir de pilotage 82 qui est monté sur le levier de pilotage 50, et qui est entouré d'une chambre annulaire 97 avec une chambre inférieure 98 et une chambre supérieure 99 situées de part et d'autre du tiroir de pilotage 82 ;
- un tiroir de by-pass 81 qui a une tige 90 sur laquelle est monté un ressort 88, qui s'appuie d'une part sur ce tiroir 81, et d'autre part sur le piston de commutation 85 et qui est disposé dans une chambre 93, l'autre extrémité 107 du tiroir de by-pass 81 ayant un chanfrein 92, et venant en contact avec le fond du logement dans le corps 45 sous l'action du ressort 88, une chambre annulaire 94 étant disposée autour de ce tiroir 81 qui possède un canal 91 débouchant dans la chambre 93 ;
- la boucle d'asservissement qui a un canal 111 reliant la chambre supérieure 60 du vérin 9 à la chambre annulaire 94, reliée elle-même par un canal 113 à la chambre annulaire 97 du pilotage, et un canal 112 reliant la chambre inférieure 61 du vérin 9 à la chambre annulaire 94 du tiroir de by-pass 81, qui est reliée par un canal 114 à la chambre inférieure 98 du pilotage ;
- un canal 118 qui est relié à l'alimentation du circuit hydraulique, et qui est relié à un canal 117 qui aboutit au tiroir de by-pass 81 ;
- un canal 116 qui est relié au retour au réservoir de fluide hydraulique et qui aboutit dans la chambre supérieure 99 du pilotage, qui est reliée elle-même par un canal 115 à la chambre 93 du tiroir de by-pass 81.

Tous ces éléments constituent l'ensemble de distribution à boucle d'asservissement dont le système de commutation comporte :
- un tiroir de commutation 83 monté sur le levier de pilotage 50 avec une chambre inférieure 101 et une chambre supérieure 102 qui sont situées de part et d'autre du tiroir de commutation 83 ;
- un piston de commutation 85 monté dans le corps 45 et dans le prolongement du tiroir de by-pass 81, de manière que le ressort 88 de ce tiroir 81 s'appuie sur ce piston 85 ;
- un canal 122 qui relie le fond du piston de commutation 85 à la chambre inférieure 101 par un canal 120, et à la chambre supérieure 102 par un canal 121, et d'autre part un canal 119 qui relie le tiroir de commutation 83 au canal 118 d'alimentation.

Le piston de commutation 85 comporte à sa partie supérieure un embrèvement qui constitue une chambre d'extrémité 86, dans laquelle aboutit le canal 122.

Le verrou additionnel 86 du piston de commutation 85 est monté perpendiculairement à l'axe de ce piston de commutation 85, et il est poussé par un ressort 89 monté dans un logement du corps 45, de manière à ce que le verrou additionnel 86 puisse venir s'engager dans une gorge 95 qui est aménagée dans le piston de commutation 85.

L'amortisseur est constitué par un tiroir d'amortissement 84 qui est monté sur le levier de pilotage 50, et qui est constitué par une collerette 103 qui sépare une chambre inférieure 105 d'une chambre supérieure 106, qui sont raccordées l'une et l'autre au canal d'alimentation 118 par le branchement sur le canal 119 d'un canal 125, ce canal 125 étant relié d'une part par le canal 126 à la chambre inférieure 105, et d'autre part par le canal 127 à la chambre supérieure 106, la collerette 103 possédant au moins un étranglement 104 qui relie les deux chambres 105 et 106.

Le système de rappel élastique du levier de pilotage 50, qui est disposé à l'extrémité opposée au levier d'entrée 49, est constitué par un ressort 87 de compression. Ce ressort 87 est monté dans un logement du corps 45 du servodistributeur 41 et il vient s'appuyer d'une part sur le fond de ce logement, et d'autre part contre l'extrémité du levier de pilotage 50.

Le circuit de commutation comporte en plus un canal de liaison 123 qui est disposé entre le canal 115 de retour au réservoir de la chambre 93 du tiroir de by-pass 81, et le canal 122 d'alimentation du vérin de commutation 85. Ce canal de liaison 123 est muni d'un étranglement 124.

L'ensemble de distribution à boucle d'asservissement du servodistributeur passif 42 en fonctionnement normal comporte :
- un tiroir de pilotage 142 qui est monté sur le levier de pilotage 50, et qui est entouré d'une chambre annulaire 157, avec une chambre inférieure 158 et une chambre supérieure 159 qui sont situées de part et d'autre du tiroir de pilotage 142 ;
- un tiroir de by-pass 141 avec une tige 150 sur laquelle est monté un ressort 148, qui s'appuie d'une part sur ce tiroir 141, et d'autre part sur le corps 46, et qui est disposé dans une chambre 153, l'autre extrémité 167 du tiroir de by-pass 141 ayant un chanfrein 152 qui vient en contact contre le fond du corps 46 sous l'action du ressort 148, une chambre annulaire 154 étant disposée autour de ce tiroir 141 qui possède un canal 151 débouchant dans la chambre 153 ;
- la boucle d'asservissement qui a :
   . un canal 171 qui relie la chambre supérieure 60 du vérin 9 à la chambre annulaire 154 du tiroir de by-pass 141, qui est reliée elle-même par un canal 173 à la chambre annulaire de pilotage 157 ;
   . et un canal 172 qui relie la chambre inférieure 61 du vérin de puissance 9 au tiroir de by-pass 141, qui est relié lui-même par un canal 174 à la chambre inférieure 158 du pilotage ;
- un canal 178 qui est relié d'une part à l'alimentation du circuit hydraulique, et d'autre part au canal 177 qui aboutit au tiroir de by-pass 141 ; un canal 176 qui est relié au retour au réservoir et qui aboutit dans la chambre 159 de pilotage qui est reliée par un canal 175 à la chambre 153 du tiroir de by-pass 141.

Le circuit de commutation de la boucle d'asservissement du servodistributeur passif 42 en fonctionnement normal comporte :
- un tiroir de commutation 143 qui est monté sur le levier de pilotage 50 avec une chambre centrale 161 et deux portées : une portée inférieure 160 et une portée supérieure 162 qui sont situées de part et d'autre de cette chambre centrale 161 ;
- un piston de commutation 145 qui est monté dans le corps 46 et dans le prolongement du tiroir de by-pass 141 ;
- un canal 182 qui relie le fond du piston de commutation 145 par des canaux 180 et 181 à la chambre centrale 161 du tiroir de commutation 143, qui est lui-même relié par un canal 179 au canal d'alimentation 178 sous pression ; cette pression agissant sur le piston de commutation 145 pour le maintenir en position basse initiale, un canal 184 étant raccordé au canal 176 relié au retour au réservoir et aboutissant à la portée inférieure 160, et un canal 188 raccordé au canal 184 et aboutissant à la portée supérieure 162.

Le piston de commutation 145 comporte un embrèvement constituant une chambre d'extrémité 146, qui est disposée à son extrémité de manière que le canal 182 aboutisse dans cette chambre d'extrémité 156.

Le verrou additionnel 146 du piston de commutation 145 est monté perpendiculairement à l'axe de ce piston de commutation 145, et il est poussé par un ressort 149 logé dans le corps 46, de manière à pouvoir venir s'engager dans une gorge 55 qui est aménagée dans ce piston de commutation 145.

L'amortisseur monté sur le levier de pilotage 50 est constitué par un tiroir d'amortissement 144, et il comporte une collerette 163 qui sépare une chambre inférieure 165 d'une chambre supérieure 166. Ces chambres inférieure 165 et supérieure 166 sont raccordées l'une et l'autre au canal d'alimentation 178 par le branchement sur le canal 179 d'un canal 185. Ce canal 185 est lui-même relié par le canal 186 à la chambre inférieure 165, et par le canal 187 à la chambre supérieure 166. De plus, la collerette 163 posséde au moins un étranglement 164 qui relie les deux chambres 165 et 166.

Le système de rappel élastique qui est monté sur le levier de pilotage 50, est situé à l'extrémité opposée au levier d'entrée 49. Ce système de rappel élastique est constitué par un ressort de compression 147, qui est monté sur une tige 194 du levier de pilotage 50. Ce ressort de compression 147 est disposé entre deux rondelles, référencées 193, qui sont disposées l'une et l'autre à chacune de ces extrémités et qui sont tenues par une collerette 195 aménagée à l'extrémité supérieure du levier de pilotage 50. L'une des rondelles 193 s'applique sur un appui 189 du corps 46 du servodistributeur 42, et l'autre rondelle 193 s'applique sur un appui 190 du corps 46.

La Figure 3 représente l'une des trois servocommandes actives en positionnement normal, dans le cas où l'ensemble du circuit hydraulique du vérin de puissance 9, du vérin d'ancrage 10, et du servodistributeur 41 est sans pression, ce qui correspond au cas où l'hélicoptère est au sol. Le ressort 88 du tiroir de by-pass 81 repousse ce tiroir de by-pass 81 contre le fond du corps 45, et de ce fait, le tiroir de by-pass 81 engage le verrou 51 dans le logement 55 du levier d'entrée 49 qui est ainsi verrouillé. Le piston de commutation 85 est repoussé contre le fond de son logement du corps 45 par le ressort 88 du tiroir de by-pass. Le piston de commutation 85 est en position déverrouillée, et il repousse le verrou additionnel 86 dans son logement en comprimant le ressort 89. Le levier de pilotage 50 est bloqué par le levier 49 dans sa position centrale, ce qui fait que le tiroir de pilotage 82 et le tiroir de commutation 83 sont également en position centrale puisqu'ils appartiennent à ce levier de pilotage 50.

Le circuit de la boucle d'asservissement du vérin de puissance 9 est en by-pass par l'intermédiaire du canal 91 du tiroir de by-pass 81, c'est-à-dire que la chambre supérieure 60 et la chambre inférieure 61 du vérin de puissance 9 sont raccordées au réservoir par les canaux 115 et 116. Le vérin de puissance 9 est donc libre d'être déplacé selon la position des commandes, afin de suivre le plateau non tournant 5.

La chambre inférieure 61 du vérin de puissance 9 étant raccordée au réservoir, le vérin d'ancrage 10 est débrayé hydrauliquement. Cependant, ce vérin d'ancrage 10 est maintenu en position d'ancrage par son ressort 66, qui plaque les deux pistons 65 respectivement contre l'appui 69 et contre le bord 70 du corps 63.

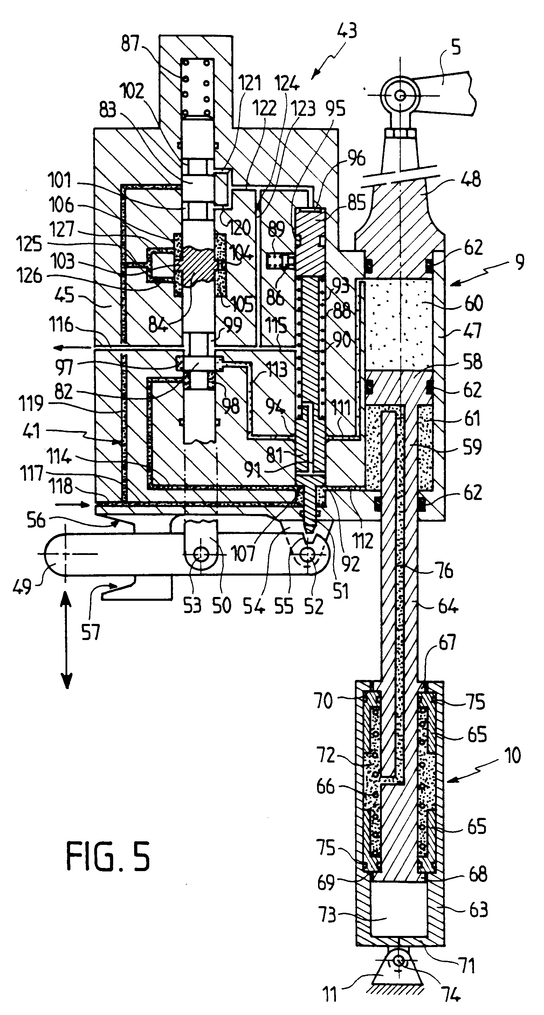

La Figure 5 représente l'une des trois servocommandes actives en positionnement normal, dans le cas où l'ensemble du circuit hydraulique du vérin de puissance 9, du vérin d'ancrage 10, et du servodistributeur 41 est mis en pression, ce qui correspond au cas de l'hélicoptère en fonctionnement normal. La pression du circuit hydraulique arrive alors dans le canal 118 et agit sur le chanfrein 92 et sa face correspondante 107 du tiroir de by-pass 81. Le tiroir de by-pass 81 se déplace alors en repoussant le ressort 88, de manière à venir en butée contre le piston de commutation 85. Le tiroir de by-pass 81 en se déplaçant dégage le verrou 51 du logement 55 et le levier d'entrée 49 est alors déverrouillé et il peut commander librement le levier de pilotage 50, c'est-à-dire le tiroir de pilotage 82 et le tiroir de commutation 83 qui appartiennent à ce levier de pilotage 50.

Le vérin de by-pass 81 en se déplaçant supprime le by-pass, c'est-à-dire la communiction du canal 91 avec le canal 111 de la chambre supérieure 60, et avec le canal 112 de la chambre inférieure 61 du vérin de puissance 9. Le vérin de by-pass 81 en se déplaçant a mis en communication le canal d'alimentation 118 avec le canal 112 de la chambre inférieure 61 du vérin de puissance 9, ainsi qu'avec le canal 114 qui aboutit à la chambre inférieure 98 du tiroir de pilotage 82. De ce fait, le circuit de la boucle d'asservissement est alimenté, et la chambre 72 du vérin d'ancrage 10 est constamment en pression, puisqu'il est relié par l'intermédiaire du canal 76 de la chambre 61 et du canal 112 au canal d'alimentation 118. Le vérin d'ancrage 10 est ainsi en position bloquée.

Le levier d'entrée 49 peut être déplacé normalement dans la plage usuelle de commande, puisqu'il est en position déverrouillée. Cependant, le levier d'entrée 49 ne peut atteindre une de ces butées haute 56 ou basse 57 qu'après déplacement de l'amortisseur de fin de course, c'est-à-dire du tiroir amortisseur 84, ce qui n'est pas possible dans des conditions normales de pilotage. De plus, le levier d'entrée 49 n'a pas pu être placé en butée au moment de la mise en pression, car il était maintenu au neutre par le verrou 51 qui était engagé dans le logement 55.

Le circuit hydraulique de la boucle d'asservissement est alors sous pression, du fait que le tiroir de by-pass 81 s'est déplacé sous l'action de la pression du canal 117, pour mettre en communication la chambre inférieure 61 du vérin de puissance 9 avec la chambre inférieure 98 du pilotage, par l'intermédiaire des canaux 112 et 114 qui sont alors reliés aux canaux 118 et 117 sous pression. Sous l'action d'un déplacement du levier d'entrée 49, le levier de pilotage 50 se déplace également et entraîne le tiroir de pilotage 82, qui se déplace pour mettre en communication la chambre supérieure 60 du vérin de puissance 9 avec la chambre inférieure 98 ou avec la chambre supérieure 99 du pilotage, suivant le sens du déplacement du levier de pilotage 50, afin que le corps 47 du vérin de puissance 9 se déplace jusqu'au retour à la position d'équilibre du tiroir 82 de pilotage.

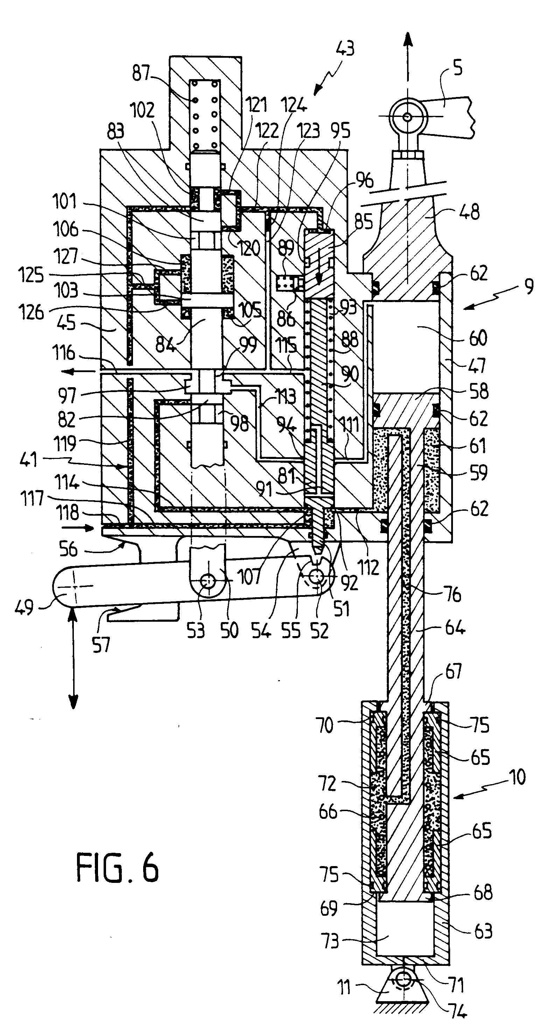

La Figure 6 représente l'une des trois servocommandes actives en positionnement normal, dans le cas où se produit une panne, causée par exemple par un impact de projectile qui entraîne le blocage du vérin de puissance 9. La servocommande ne peut alors plus se déplacer, et l'effort de pilotage amène le levier d'entrée 49 sur une de ces butées supérieure 56 ou inférieure 57, en déplaçant le tiroir 84 de l'amortisseur.

Le levier de pilotage 50 se déplace donc vers le haut ou vers le bas d'une valeur supérieure à la valeur admise, et il met en communication le circuit de commutation avec le canal d'alimentation 118. En effet, le levier de pilotage 50 en se déplaçant entraîne le tiroir de commutation 83 vers le bas ou vers le haut, ce qui permet au canal 122 aboutissant dans la cavité 96 du piston de commutation 85 d'être en communication avec le canal 119 qui est relié au canal d'alimentation 118. Pour cela, le levier de pilotage 50 en se déplaçant a mis en communication la chambre inférieure 101 ou la chambre supérieure 102 du tiroir de communication 83 avec d'une part le canal 119, et avec d'autre part soit le canal 120, soit le canal 121 qui sont reliés l'un et l'autre au canal 122 aboutissant au piston de commutation 96. Dans le cas représenté sur la Figure 6, il y a eu un déplacement du levier de pilotage 50 vers le bas, et c'est la chambre supérieure 102 qui met en communication le piston 85 avec le canal d'alimentation 118 par l'intermédiaire des canaux 122, 121 de la chambre supérieure 102, et du canal 119. La pression agit alors dans la cavité 96 du piston de commutation 85 qui se déplace vers le bas, c'est-à-dire dans le sens de la flêche représentée sur la Figure, qui repousse alors le tiroir de by-pass 81 jusqu'à ce que sa face 107 vienne en butée contre le fond du logement du corps 45.

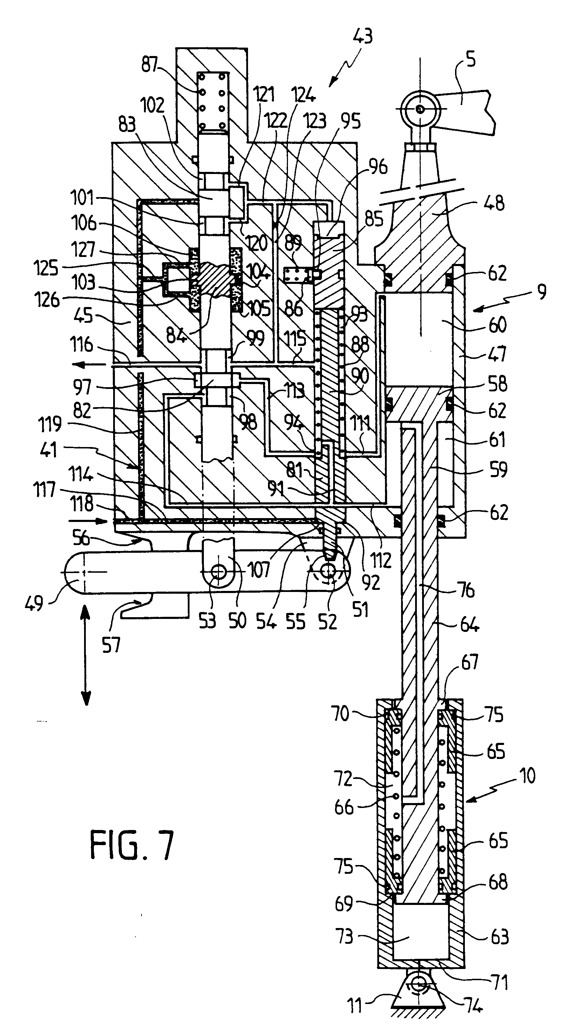

La Figure 7 est une Figure analogue à la Figure 6, c'est-à-dire quelle représente l'une des trois servocommandes actives en position normale, dans le cas où cette servocommande a été neutralisée immédiatement après la panne. Le piston de commutation 85, comme on l'a vu pour la Figure 6, s'est donc déplacé pour se mettre en position de secours, c'est-à-dire la position qui correspond à celle où le tiroir de by-pass vient en butée par sa face 107 contre le fond du logement du corps 45. Le tiroir de by-pass 81 met alors en communication la chambre supérieure 60 et la chambre inférieure 61 du vérin de puissance 9 avec le retour au réservoir. Pour cela, le canal 91 du tiroir de by-pass 81 met en communication le canal 112 relié à la chambre inférieure 61, et le canal 114 relié à la chambre inférieure 98 du tiroir de pilotage 82 avec la chambre 93, qui est elle-même reliée au réservoir par l'intermédiaire du canal 115, de la chambre 99 du tiroir de pilotage 82, et du canal 116. Le tiroir de by-pass 81 dans cette position met également en communication le canal 111 relié à la chambre supérieure 60 du vérin de puissance, et le canal 113 relié à la chambre annulaire du tiroir de pilotage 82 en communication avec la chambre 93 par la chambre annulaire 94.

Le circuit de la boucle d'asservissement du vérin de puissance est ainsi relié au réservoir, c'est-à-dire que la chambre supérieure 60 et la chambre inférieure 61 sont raccordées à ce réservoir et que de ce fait, la chambre 72 du vérin d'ancrage est également raccordée au retour au réservoir.

Le piston de commutation se trouve en position de secours, et sa position est maintenue par l'intermédiaire du verrou additionnel 86 qui vient s'engager dans la gorge 95 du piston de commutation 85. D'autre part, le tiroir de by-pass 81 en se déplaçant vers le bas, a engagé le verrou 51 dans le logement 55, ce qui bloque le verrou d'entrée 49 en position verrouillée, et ramène le levier de pilotage 50 en position centrale. La servocommande devient alors inopérante et elle est maintenue dans cette position, où elle est neutralisée par le vérin de commutation 85. De ce fait, cette servocommande peut suivre les déplacements du plateau non tournant 5 sans avoir aucune action sur celui-ci, du fait que l'ensemble des chambres du vérin de puissance 9 et du vérin d'ancrage 10 se trouvent mis au retour au réservoir.

La Figure 4 représente la servocommande passive en position normale, dans le cas où l'ensemble du circuit hydraulique du vérin de puissance 9, du vérin d'ancrage 10, et du servodistributeur 43 est sans pression, ce qui correspond au cas de l'hélicoptère au sol. Le ressort 148 du tiroir de by-pass 141 repousse ce tiroir de by-pass 141 jusqu'à ce sa face 167 vienne en butée contre le fond du logement du corps 46. Le tiroir de by-pass 141 pousse alors le verrou 51 dans le logement 55 du levier d'entrée 49, qui se trouve alors verrouillé dans sa position centrale. De ce fait, le levier de pilotage 50 est également bloqué en position centrale, et il en est de même pour le tiroir de pilotage 142, pour le tiroir de commutation 143, ainsi que pour le tiroir d'amortisseur 144. La chambre supérieure 60 et la chambre inférieure 61 du vérin de puissance 9 sont reliées au retour au réservoir par le canal 151 du tiroir de by-pass 141, qui aboutit dans la chambre 153 reliée aux canaux 175 et 176 du retour au réservoir. Le vérin de puissance est donc en by-pass et il est libre d'être déplacé selon la position des commandes.

La chambre 72 du vérin d'ancrage 10 est reliée à la chambre inférieure 61 du vérin de puissance 9 par le canal 76, et de ce fait, cette chambre 72 est également reliée au retour au réservoir. Le vérin d'ancrage 10 est ainsi débrayé hydrauliquement, mais il est maintenu en position d'ancrage par le ressort 66. En effet, ce ressort 66 repousse les deux pistons 65 respectivement contre la face d'appui 69 et contre le bord 70 du corps 63.

La servocommande est passive, le levier d'entrée 49 est verrouillé, et le vérin de puissance 9 étant en by-pass peut être déplacé selon la position des commandes.

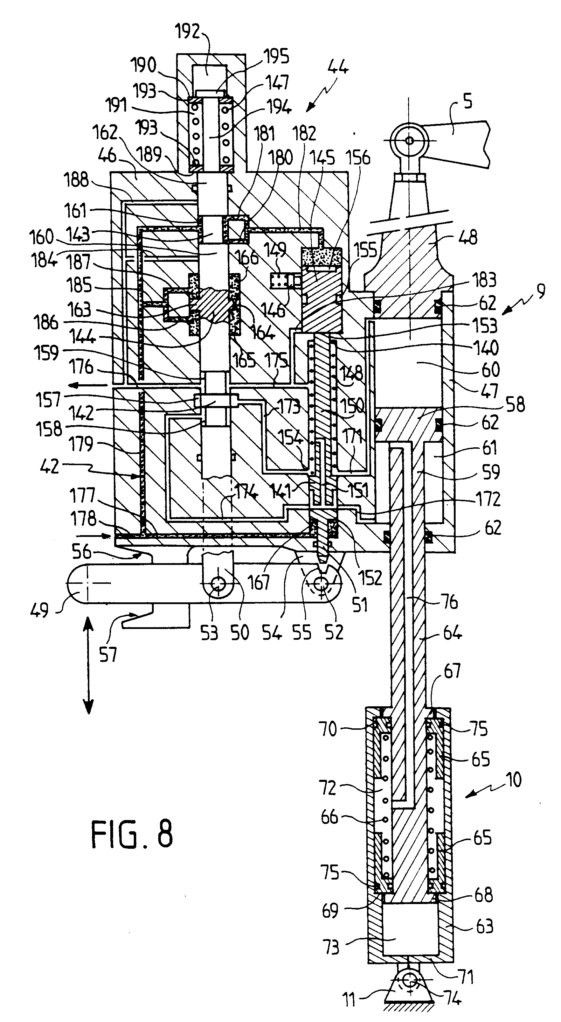

La Figure 8 représente la servocommande passive en position normale, dans le cas où le circuit est mis en pression, ce qui correspond au cas où l'hélicoptère est en fonctionnement. La pression arrive par l'intermédiaire du canal 178, et elle s'établit dans le canal 177. De ce fait, la pression repousse le tiroir de by-pass 141 contre le piston de commutation 156. Le canal d'alimentation 178 met également en pression le canal 179 qui alimente le tiroir d'amortisseur 144, et le circuit de commutation. Les chambres supérieure 166 et inférieure 165 du tiroir de commutation 144 sont ainsi alimentées par l'intermédiaire respectivement des canaux 187 et 186 qui sont reliés au canal 179 par l'intermédiaire du canal central 185. Le circuit de commutation est alimenté par la chambre centrale du tiroir de commutation 143, qui est relié d'une part au canal 179, et d'autre part au canal 182 qui aboutit dans la cavité 156 du piston de commutation 155, par l'intermédiaire des deux canaux parallèles 180 et 181 qui aboutissent l'un et l'autre dans cette chambre centrale 161 du tiroir de commutation 143. Le piston de commutation 156 vient ainsi en butée contre le fond de son logement, et ce piston de commutation 145 peut ainsi servir de butée au tiroir de by-pass 141 qui reste dans cette position par l'effet de la pression régnant dans le canal 177, et qui agit sur la face 167 et le chanfrein 152. Le tiroir de by-pass 141 en se déplaçant a dégagé le verrou 51 du logement 55, et de ce fait, le levier d'entrée 49 est déverrouillé, tout en laissant les chambres supérieure 60 et inférieure 61 du vérin 9 reliées au retour au réservoir, afin que le servodistributeur passif 42 reste inopérant.

La servocommande passive est inopérante et elle est entraînée dans ces mouvements par le plateau cyclique. L'écart de position transitoire ou permanent avec la timonerie de commande est absorbé par le jeu d'entrée, c'est-à-dire par le déplacement possible du levier d'entrée 49. En effet, ce déplacement doit être suffisant pour que les butées supérieure 56 et inférieure 57 ne soient pas atteintes.

Le vérin d'ancrage 10 est débrayé, mais le ressort 66 le maintient en position moyenne, pour imposer que le déplacement de la servocommande passive soit fait par le coulissement du vérin de puissance 9, comme si elle était asservie. Ceci permet d'éviter la dérive vers une butée du vérin d'ancrage 10 et du piston 58 de servocommande.

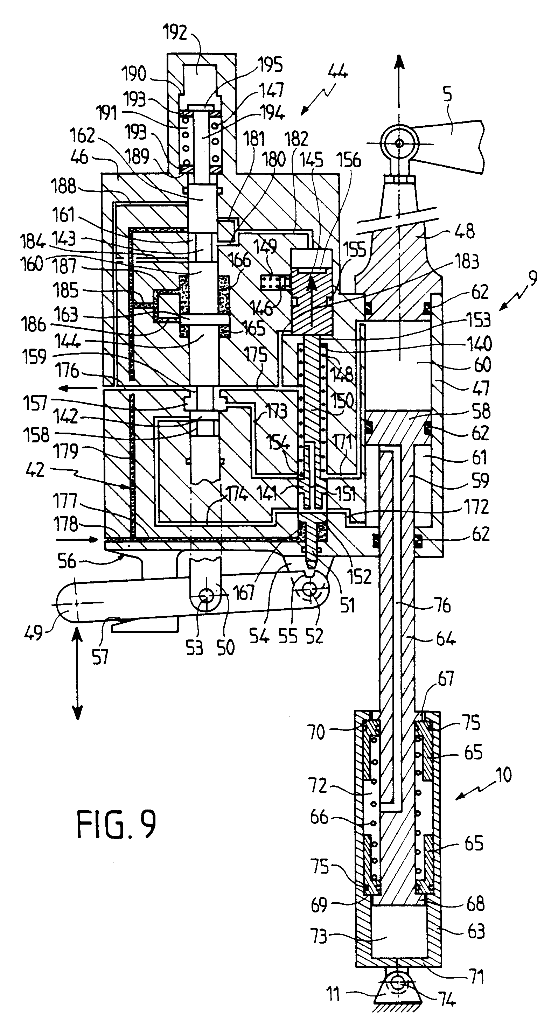

La Figure 9 représente la servocommande passive en position normale avec son circuit hydraulique sous pression, au moment où une panne causée par un tir est intervenue sur une des trois servocommandes actives en position normale. Comme cela a été vu au sujet de la Figure 7, cette servocommande est alors neutralisée, et le circuit se met dans la position représentée sur cette Figure. Le plateau non tournant 5 n'est plus alors maintenu que par deux servocommandes actives, et il exerce donc un effort sur la servocommande passive. Le levier d'entrée 49 de cette servocommande passive est maintenu par la timonerie, et il est mis en butée contre l'une des butées supérieure 56 ou inférieure 57. Le levier d'entrée 49 en se déplaçant entraîne le levier de pilotage 50, qui se déplace vers le haut ou vers le bas d'une valeur supérieure à la valeur admise. Dans ce déplacement, le levier de pilotage 50 entraîne également le tiroir de pilotage 142, le tiroir 144 de l'amortisseur, et le tiroir de commutation 143. Ce déplacement entraîne la mise au réservoir du circuit de commutation, du fait que la chambre centrale 161 du tiroir de commutation 143 se trouve alors en communication avec le canal de retour au réservoir 176, par l'intermédiaire du canal 188 qui est relié à cette chambre centrale 161 par l'intermédiaire du canal 184. La chambre centrale 161 du tiroir de commutation 143 est en effet reliée par l'un des canaux 180 et 181 à la cavité 156 du piston de commutation 145 par l'intermédiaire du canal 182. Dans le cas de la Figure 9, le déplacement du levier de pilotage 50 s'est effectué vers le bas, et c'est le canal 180 qui est en communication avec les canaux 184 et 176. Le levier de pilotage 50 en se déplaçant a également fermé la communication entre le circuit de commutation et le canal d'alimentation 178, par l'intermédiaire du canal 179 qui est bloqué par la portée du levier de pilotage 50. Le circuit de commutation étant alors en communication avec le réservoir, le tiroir de by-pass 141 peut alors se déplacer sous l'action de la pression du canal 177 qui agit sur la face 167 de ce tiroir de by-pass 141, qui peut ainsi repousser le piston de commutation 145 dans le sens de la flêche, afin que le tiroir de by-pass 141 puisse se fermer.

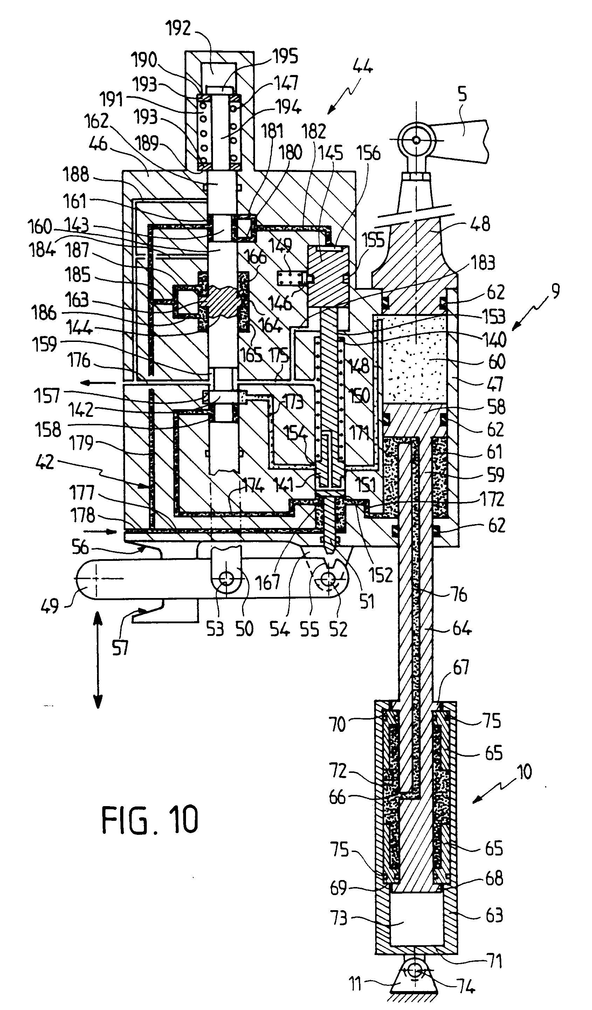

La Figure 10 est une Figure analogue à la Figure 9 qui représente la servocommande passive en position normale, et dans laquelle le tiroir de by-pass 141 a terminé sa course qui l'a amené à pousser le piston de commutation 145 en butée contre le fond de son logement dans le carter 46. De ce fait, le tiroir de by-pass 141 en se déplaçant ainsi a mis en communication le canal d'alimentation 178 avec le circuit de la boucle d'asservissement du piston de puissance 9, c'est-à-dire qu'il a mis en communication le canal 178 d'alimentation avec les canaux 151 et 174 par l'intermédiaire du canal 177. Le canal 151 étant relié à la chambre inférieure 61 du vérin de puissance 9, et le canal 174 étant relié à la chambre inférieure 158 du tiroir de pilotage 142. Le tiroir de by-pass 141 en se déplaçant a également fermé la mise en communication avec le réservoir des canaux 173 et 171 du circuit de la boucle d'asservissement en correspondance avec la chambre supérieure 60 du vérin de puissance 9.

La pression d'alimentation 178 par l'intermédiaire du canal 177 alimente également, par l'intermédiaire du canal 151 et de la chambre inférieure 61 du vérin de puissance, la chambre 72 du vérin d'ancrage 10 par l'intermédiaire du canal 76.

Comme on le voit sur la Figure, le piston de commutation 145, en se déplaçant pour venir en butée vers le haut dans le fond de son logement dans le corps 46, a permis au verrou additionnel 146 de venir s'engager dans la gorge 155 du piston de commutation 145 sous l'action de son ressort 149, afin de bloquer ce piston de commutation 145 de façon que ce piston de commutation 145 reste en position de sauvegarde.

Ainsi, lors d'une panne sur l'une des trois servocommandes actives en fonctionnement normal, le levier de pilotage 50 de la servocommande passive se déplace vers le haut ou vers le bas, d'une valeur supérieure à la valeur admise, et il met en communication la chambre centrale 161 de pilotage avec l'un des canaux 184 et 188 qui sont reliés au retour au réservoir. Le piston de commutation 145 peut alors se déplacer sous l'action du tiroir de by-pass 141, qui est poussé par la pression pour se mettre en position de secours. Le tiroir de by-pass 141 met de ce fait en communication la chambre inférieure 61 du vérin de puissance 9 avec la chambre inférieure 158 du tiroir de pilotage 142 par les canaux 172 et 174, qui sont ainsi reliés au canal 178. De plus, le tiroir de by-pass 141 supprime la liaison avec le retour au réservoir de la chambre supérieure 60, et la servocommande normalement passive devient opérationnelle.

La servocommande est alors active et maintenue dans cette position par le fait que le piston de commutation est verrouillé par le verrou additionnel 146, ce qui garantit la fermeture du by-pass et ce qui permet l'alimentation du circuit de la boucle d'asservissement du vérin de puissance 9, et l'alimentation du vérin d'ancrage 10.

Le dispositif à vulnérabilité réduite, selon l'invention, permet ainsi de maintenir un pilotage normal en cas de panne causée par un impact de projectile sur l'une des servocommandes actives, et ceci sans l'intervention du pilote. De plus, le dispositif de l'invention permet aussi de garantir le fonctionnement normal du pilotage dans le cas d'autres causes possibles, comme indiqué ci-après.

Le blocage du vérin 9 de la servocommande passive ne perturbe pas le fonctionnement normal du pilotage, du fait que le vérin d'ancrage 10 est débrayé.

Le blocage d'un vérin d'ancrage 10 sans fuite hydraulique de l'une quelconque des trois commandes actives en fonctionnement normal n'entraîne pas de perturbation dans le fonctionnement de l'ensemble du dispositif.

Dans le cas d'une fuite hydraulique pour une cause quelconque sur l'une des trois servocommandes normalement actives, cette servocommande est alors neutralisée, et la servocommande normalement passive se met en position de sauvegarde, comme cela a été décrit précédemment. Dans le cas d'une fuite hydraulique pour une cause quelconque sur la servocommande passive, il n'y a alors aucune conséquence sur le pilotage et la perte de pression est simplement signalée au pilote.

Dans le cas d'une rupture du levier d'entrée 49, ou de la timonerie 13 de commande d'une des servocommandes actives, le ressort 87 placé à l'extrémité du levier de pilotage 50 repousse celui-ci et la commutation intervient de façon à ce que cette servocommande soit neutralisée et que la servocommande passive se mette en position de sauvegarde, comme cela a été indiqué précédemment. Dans le cas d'une rupture du levier d'entrée 49 ou de la timonerie 13 de commande de la servocommande passive, le levier de pilotage 50 reste en position moyenne du fait de l'action du verrou 51 poussé par le ressort 148, et la servocommande reste débrayée.

Dans le cas de la rupture d'une des trois servocommandes normalement actives ou de son ancrage correspondant, la servocommande devient alors inopérante, et la servocommande passive se met en position de sauvegarde, comme cela a été indiqué précédemment. Dans le cas de la rupture de la servocommande passive ou de son ancrage, il n'y a pas de conséquence sur le pilotage.

## Revendications

1. Dispositif à vulnérabilité réduite pour la manoeuvre d'un rotor sustentateur et propulseur d'hélicoptère, par l'intermédiaire d'un mécanisme à plateaux cycliques montés coaxialement sur l'arbre d'entraînement du rotor (6), dont le plateau tournant est accouplé par sa partie périphérique individuellement avec une biellette de commande du pas de chaque pale du rotor, et dont le plateau non tournant (5) est attelé en quatre points (1, 2, 3, 4) répartis de façon régulière à sa périphérie, à quatre servocommandes hydrauliques d'actionnement comportant chacune un vérin de puissance (9), un système d'ancrage (10) et un servodistributeur (41, 42), trois des servocommandes étant utilisées en fonctionnement normal, la quatrième étant utilisée en secours en cas de défaillance d'une des trois autres,
caractérisé en ce que :
- chaque vérin de puissance (9) est alimenté par un circuit hydraulique, indépendant des circuits des autres vérins (9), et qui comprend le servodistributeur (41, 42) manoeuvré par une entrée mécanique, relié au poste de pilotage par une timonerie (13) ;
- chaque vérin de puissance (9) comporte un système d'ancrage débrayable ;
- trois des servodistributeurs (41) ont une structure agencée, de manière à être actifs en fonctionnement normal et à bloquer le système d'ancrage de chaque vérin (9) correspondant, et un servodistributeur (42) a une structure agencée, de manière à être passif en fonctionnement normal et à maintenir débrayé le système d'ancrage du vérin (9) correspondant ;
- chacune des entrées mécaniques de ces quatre servodistributeurs (41, 42) comporte un système qui, au-dessus d'un seuil d'effort sur l'un des trois servodistributeurs (41) normalement actifs, neutralise ce servodistributeur et initie la mise en fonctionnement du servodistributeur (42) normalement inactif, qui devient opérationnel en fonctionnement de sauvegarde.

2. Dispositif selon la revendication 1, caractérisé en ce que chaque servodistributeur (41, 42) est intégré au vérin de puissance (9) correspondant, de manière à constituer un ensemble monobloc (43, 44) constitué par le corps (45, 46) du servodistributeur (41, 42) et le corps (47) du vérin de puissance (9).

3. Dispositif selon l'une des revendications précédentes 1 ou 2, caractérisé en ce que chaque servodistributeur (41, 42) comporte :
- un ensemble de distribution à boucle d'asservissement entre la position du corps (47) du vérin de puissance (9) et la position de l'entrée mécanique correspondante ;
- un système de commutation de cette boucle d'asservissement, de manière à la mettre dans !'état opposé à celui du fonctionnement normal du dispositif de commande du plateau non tournant (5).

4. Dispositif selon la revendication 3, caractérisé en ce que la boucle d'asservissement a le retour de l'information de la position du corps du vérin de puissance (9), qui agit directement sur la position de l'entrée mécanique montée sur l'ensemble monobloc (43, 44), au moyen d'un système de pilotage relié à l'entrée mécanique, de manière qu'une modification de la position de l'entrée mécanique par rapport à l'ensemble monobloc (43, 44), suite à une manoeuvre du pilote, entraîne le déplacement du corps (47) du vérin de puissance (9), c'est-à-dire le déplacement de l'ensemble monobloc (43, 44), jusqu'à ce que l'entrée mécanique retrouve sa position relative initiale par rapport à cet ensemble monobloc (43, 44).

5. Dispositif selon la revendication 4, caractérisé en ce que la boucle d'asservissement est reliée à la pression d'alimentation du circuit hydraulique indépendant correspondant, et que le système de pilotage est raccordé au réservoir de ce circuit indépendant.

6. Dispositif selon l'une des revendications 4 et 5, caractérisé en ce que le système de pilotage comporte un tiroir de pilotage (82, 142) relié à l'entrée mécanique.

7. Dispositif selon l'une quelconque des revendications 3 à 6, caractérisé en ce que le vérin de puissance (9) est à section différentielle, et comporte un piston (58) avec une tige (59) reliée au système d'ancrage, de manière à avoir une chambre supérieure (60) et une chambre inférieure (61) du côté de la tige (59), qui sont raccordées à la boucle d'asservissement, de manière que, lors du fonctionnement du vérin de puissance (9), la chambre inférieure (61) soit toujours raccordée au circuit hydraulique sous pression.

8. Dispositif selon la revendication 7, caractérisé en ce que le système de commutation de la boucle d'asservissement comporte :
- un tiroir de by-pass (81, 141) du vérin de puissance (9) monté dans la boucle d'asservissement ;
- un piston de commutation (85, 145) à des positions ;
- un distributeur de commutation agissant sur le piston de commutation (85, 145) pour avoir les deux positions :
. une position initiale dans laquelle le piston de commutation (85, 145) coopère avec le tiroir de by-pass (81, 141), afin d'obtenir le fonctionnement normal du servodistributeur (41, 42) du vérin de puissance (9) correspondant ;
. une position de secours dans laquelle le piston de commutation (85, 145) coopère avec le tiroir de by-pass (81, 141), afin d'obtenir le fonctionnement de sauvegarde du servodistributeur (41, 42) du vérin de puissance (9) correspondant.

9. Dispositif selon la revendication 8, caractérisé en ce que le tiroir de by-pass (81, 141) est monté sur le canal d'alimentation (117, 118 ; 177, 178) de la boucle d'asservissement, et est raccordé au réservoir de manière à ce que ce tiroir de by-pass (81, 141) ait au moins deux positions :
- une position correspondant à la boucle d'asservissement sans pression,
- une position de fonctionnement du servodistributeur (41, 42) correspondant à la boucle d'asservissement sous pression.

10. Dispositif selon l'une des revendications 8 et 9, caractérisé en ce que le piston de commutation (85, 145) est bloqué dans la position de secours par un verrou additionnel (86, 146).

11. Dispositif selon l'une quelconque des revendications précédentes, caractérisé en ce que l'entrée mécanique est munie d'un verrou (51).

12. Dispositif selon les revendications 8 et 11, caractérisé en ce que le tiroir de by-pass (81, 141) porte le verrou (51) qui agit sur l'entrée mécanique.

13. Dispositif selon l'une quelconque des revendications 8 à 12, caractérisé en ce que le tiroir de pilotage (82, 142) et le distributeur de commutation (83, 160) appartiennent à la même pièce, qui est le levier de pilotage (50) relié à l'entrée mécanique constituée par un levier d'entrée (49).

14. Dispositif selon la revendication 13, caractérisé en ce que le levier de pilotage (50) comporte à l'extrémité opposée au levier d'entrée (49) un système de rappel élastique.

15. Dispositif selon la revendication 14, caractérisé en ce que le système de rappel élastique est constitué par un ressort (87) de compression monté entre le corps (45) du servodistributeur (41) et l'extrémité du levier de pilotage (50).

16. Dispositif selon la revendication 14, caractérisé en ce que le système de rappel élastique est constitué par un ressort de compression (147) monté sur une tige (194) du levier de pilotage (50) entre deux rondelles (193) disposées à chacune de ses extrémités et tenues par une collerette (195), une rondelle (193) s'appliquant sur un appui (189) du corps (46) du servodistributeur (42) et une rondelle (193) s'appliquant sur un appui (190) de ce corps (46).

17. Dispositif selon l'une quelconque des revendications 13 et 14, caractérisé en ce que l'entrée mécanique est constituée par le levier d'entrée (49) qui est monté sous le corps (45, 46) du servodistributeur (41, 42) par l'intermédiaire d'une articulation (52) disposée à l'une de ses extrémités, l'autre extrémité recevant le mouvement d'entrée par l'intermédiaire du système correspondant, le levier de pilotage (50) étant relié au levier d'entrée (49) par une articulation (53) disposée entre l'entrée de mouvement et l'articulation (52) du montage de ce levier d'entrée (49).

18. Dispositif selon la revendication 17, caractérisé en ce que le levier d'entrée (49) coopère avec deux butées : une butée haute (56) et une butée basse (57) solidaires du corps (45, 46) du servodistributeur (41, 42).

19. Dispositif selon l'une quelconque des revendications 17 et 18, caractérisé en ce que le levier d'entrée (49) comporte un logement (55) aménagé du côté supérieur de l'articulation (52) de montage, ce logement (55) recevant le verrou (51) porté par le tiroir de by-pass venant bloquer le levier d'entrée (49).

20. Dispositif selon la revendication 19, caractérisé en ce que le logement (55) et le verrou (51) ont un profil conjugué de forme sensiblement tronconique.

21. Dispositif selon l'une quelconque des revendications 17 à 20, caractérisé en ce que !'articulation (52) de montage du levier d'entrée (49) est supportée par deux oreilles (54) aménagées sous le corps (45, 46) du servodistributeur (41, 42).

22. Dispositif selon l'une quelconque des revendications 13 à 21, caractérisé en ce que le levier de pilotage (50) comporte un amortisseur.

23. Dispositif selon la revendication 21, caractérisé en ce que chacun des trois servodistributeurs actifs (41) en fonctionnement normal comporte :
- un tiroir de pilotage (82) monté sur le levier de pilotage (50) et entouré d'une chambre annulaire (97) avec une chambre inférieure (98) et une chambre supérieure (99) situées de part et d'autre du tiroir de pilotage (82) ;
- un tiroir de by-pass (81) avec une tige (90) sur laquelle est monté un ressort (88) qui s'appuie d'une part sur ce tiroir (81) et d'autre part sur le corps (45) et qui est disposé dans une chambre (93), l'autre extrémité (107) du tiroir de by-pass (81) ayant un chanfrein (92), et venant en contact avec le corps (45) sous l'action du ressort (88), une chambre annulaire (94) étant disposée autour de ce tiroir qui possède un canal (91) débouchant dans la chambre (93) ;
- la boucle d'asservissement ayant un canal (111) qui relie la chambre supérieure (60) du vérin (9) à la chambre annulaire (94), reliée elle-même par un canal (113) à la chambre annulaire (97) du pilotage, et un canal (112) reliant la chambre inférieure (61) du vérin (9) au tiroir de by-pass (81) qui est relié par un canal (114) à la chambre inférieure (98) du pilotage ;
- un canal (118) relié à l'alimentation du circuit hydraulique et au canal (117) qui aboutit au tiroir de by-pass (81) ;
- un canal (116) relié au retour au réservoir aboutissant dans la chambre supérieure (99) du pilotage qui est reliée par un canal (115) à la chambre (93) du tiroir de by-pass (81) ;
- de manière que, lorsque le circuit hydraulique est sous pression, le tiroir de by-pass (81) se déplace sous l'action de la pression du canal (117) pour mettre en communication la chambre inférieure (61) du vérin (9) avec la chambre inférieure (98) du pilotage par l'intermédiaire des canaux (112, 114), qui sont reliés alors aux canaux (118) et (117) sous pression, et que, sous l'action d'un déplacement du levier de pilotage (50), le tiroir de pilotage (82) se déplace pour mettre en communication la chambre supérieure (60) du vérin (9) avec la chambre inférieure (98) ou avec la chambre supérieure (99) du pilotage (50) suivant le sens du déplacement du levier, afin que le corps (47) du vérin se déplace jusqu'au retour à la position d'équilibre du tiroir (82) de pilotage.

24. Dispositif selon la revendication 23, caractérisé en ce que chacun des trois servodistributeurs actifs (41) en fonctionnement normal comporte :
- un tiroir de commutation (83) monté sur le levier de pilotage (50) avec une chambre inférieure (101) et une chambre supérieure (102) situées de part et d'autre du tiroir de commutation (83) ;
- un piston de commutation (85) monté dans le corps (45) et dans le prolongement du tiroir de by-pass (81), de manière que le ressort (88) de ce tiroir (81) s'appuie sur ce piston (85) ;
- un canal (122) reliant le fond du piston de commutation (85) à la chambre inférieure (101) par le canal (120), et à la chambre supérieure (102) par le canal (121), un canal (119) reliant le tiroir de commutation (83) au canal (118) d'alimentation ;
- de manière que, lorsque le levier de pilotage (50) se déplace vers le haut ou vers le bas d'une valeur supérieure à la valeur admise, il mette en communication l'une des chambres (101) et (102) avec le canal (119) sous pression, celle-ci est alors envoyée dans le canal (122) pour agir sur le piston de commutation (85) qui se déplace pour se mettre en position de secours et repousse le tiroir de by-pass (81) qui met alors en communication les chambres (60) et (61) du vérin (9) avec le retour au réservoir (115, 116), par l'intermédiaire des canaux (112) et (114) qui débouchent alors dans le canal (91) relié à la chambre (93), et par l'intermédiaire des canaux (111) et (113) dont la chambre annulaire (94) est alors reliée à la chambre (93).

25. Dispositif selon la revendication 24, caractérisé en ce que l'extrémité du piston de commutation (85) comporte un embrèvement constituant une chambre d'extrémité (96).

26. Dispositif selon l'une quelconque des revendications 24 et 25, caractérisé en ce que le verrou additionnel (86) est monté perpendiculairement à l'axe du piston de commutation (85), ce verrou additionnel (86) étant poussé par un ressort (89), de manière à pouvoir venir s'engager dans une gorge (95) aménagée dans le piston de commutation (85).

27. Dispositif selon la revendication 22 et l'une quelconque des revendications 23 à 26, caractérisé en ce que chacun des trois servodistributeurs actifs (41) en fonctionnement normal comporte un tiroir d'amortisseur (84) monté sur le levier de pilotage (50) avec une collerette (103) séparant une chambre inférieure (105) d'une chambre supérieure (106), qui sont raccordées l'une et l'autre au canal d'alimentation (118) par le branchement sur le canal (119) d'un canal (125) relié par le canal (126) à la chambre inférieure (105) et par le canal (127) à la chambre supérieure (106), la collerette (103) possédant au moins un étranglement (104) reliant les deux chambres (105) et (106).

28. Dispositif selon l'une quelconque des revendications 24 à 27, caractérisé en ce que chacun des trois servodisributeurs actifs (41) comporte un canal de liaison (123) entre le canal (115) de retour au réservoir et le canal (122) d'alimentation du piston de commutation (85), ce canal de liaison (123) comportant un étranglement (124).

29. Dispositif selon la revendication 21, caractérisé en ce que le servodistributeur passif (42) en fonctionnement normal comporte :
- un tiroir de pilotage (142) monté sur le levier de pilotage (50) et entouré d'une chambre annulaire (157), avec une chambre inférieure (158) et une chambre supérieure (159) situées de part et d'autre du tiroir de pilotage (142) ;
- un tiroir de by-pass (141) avec une tige (150) sur laquelle est monté un ressort (148) qui s'appuie d'une part sur ce tiroir (141) et d'autre part sur le corps (46), et qui est disposé dans une chambre (153), l'autre extrémité (167) du tiroir de by-pass (141) ayant un chanfrein (152), et venant en contact avec le corps (46) sous l'action du ressort (148), une chambre annulaire (154) étant disposée autour de ce tiroir (141) qui possède un canal (151) débouchant dans la chambre (153) ;
- la boucle d'asservissement ayant :
. un canal (171) qui relie la chambre supérieure (60) du vérin (9) à la chambre annulaire (154) du tiroir de by-pass (141), reliée elle-même par un canal (173) à la chambre annulaire de pilotage (157) ;
. et un canal (172) reliant la chambre inférieure (61) du vérin (9) au tiroir de by-pass (141), qui est relié par un canal (174) à la chambre inférieure (158) du pilotage ;
- un canal (178) relié à l'alimentation du circuit hydraulique et au canal (177) qui aboutit au tiroir de by-pass (141) ; un canal (176) relié au retour au réservoir aboutissant dans la chambre supérieure (159) de pilotage qui est reliée par un canal (175) à la chambre (153) du tiroir de by-pass (141) ;
- de manière que lorsque le circuit hydraulique est sous pression, le tiroir de by-pass (141) se déplace sous l'action de la pression du canal (177) tout en laissant les chambres supérieure (60) et inférieure (61) du vérin (9) reliées au retour au réservoir, afin que le servodistributeur passif (42) reste inopérant.

30. Dispositif selon la revendication 29, caractérisé en ce que le servodistributeur passif (42) en fonctionnement normal comporte :
- un tiroir de commutation (143) monté sur le levier de pilotage (50) avec une chambre centrale (161) et deux portées : une portée inférieure (160) et une portée supérieure (162) situées de part et d'autre de cette chambre centrale (161) ;
- un piston de commutation (145) monté dans le corps (46) et dans le prolongement du tiroir de by-pass (141) ;
- un canal (182) reliant le fond du piston de commutation (145) par des canaux (180) et (181) à la chambre centrale (161) du tiroir de commutation (143) qui est relié par un canal (179) au canal d'alimentation (178) sous pression qui agit sur le piston de commutation (145), pour le maintenir en position basse initiale, un canal (184) raccordé au canal (176) relié au retour au réservoir aboutissant à la portée inférieure (160) et un canal (188) raccordé au canal (184) aboutissant à la portée supérieure (162) ;
- de manière que lorsque le levier de pilotage (50) se déplace vers le haut ou vers le bas, d'une valeur supérieure à la valeur admise, il mette en communication la chambre centrale (161) avec l'un des canaux (184) et (188) reliés au retour au réservoir, le piston de commutation (145) peut alors se déplacer sous l'action du tiroir de by-pass (141) poussé par la pression pour se mettre en position de secours, ce tiroir de by-pass (141) met de ce fait en communication la chambre inférieure (61) du vérin (9) avec la chambre inférieure (158) du tiroir de pilotage (142) par les canaux (172) et (174) qui sont ainsi reliés au canal d'alimentation (178), et le tiroir de by-pass (141) supprime la liaison avec le retour au réservoir de la chambre supérieure (60), et le servodistributeur passif (42) devient opérationnel.

31. Dispositif selon la revendication 30, caractérisé en ce que l'extrémité du piston de commutation (145) comporte un embrèvement constituant une chambre d'extrémité (156).

32. Dispositif selon l'une quelconque des revendications 30 et 31, caractérisé en ce que le verrou additionnel (146) est monté perpendiculairement à l'axe du piston de commutation (145), ce verrou additionnel (146) étant poussé par un ressort (149), de manière à pouvoir venir s'engager dans une gorge (155) aménagée dans le piston de commutation (145).

33. Dispositif selon la revendication 22 et l'une quelconque des revendications 29 à 32, caractérisé en ce que le servodistributeur passif (42) en fonctionnement normal comporte un tiroir d'amortissement (144) monté sur le levier de pilotage (50) avec une collerette (163) séparant une chambre inférieure (165) d'une chambre supérieure (166), qui sont raccordées l'une et l'autre au canal d'alimentation (178) par le branchement sur le canal (179) d'un canal (185) relié par le canal (186) à la chambre inférieure (165) et par le canal (187) à la chambre supérieure (166), la collerette (163) possédant au moins un étranglement (164) reliant les deux chambres (165) et (166).

34. Dispositif selon l'une quelconque des revendications 7 à 33, caractérisé en ce que le système d'ancrage comporte un vérin d'ancrage (10) ayant des moyens de liaison avec le vérin (9) de puissance et dont le circuit hydraulique est relié à la chambre inférieure (61) de ce vérin de puissance (9), le vérin d'ancrage (10) étant lié à un élément (11) de la structure de l'hélicoptère par des moyens d'accrochage.

35. Dispositif selon la revendication 34, caractérisé en ce que le vérin d'ancrage (10) comporte un corps (63) avec une tige (64) portant deux pistons (65) coulissant dans le corps (63) et déterminant, avec la tige (64) et le corps (63), une chambre (72).

36. Dispositif selon la revendication 35, caractérisé en ce que la tige (59) du vérin de puissance (9) et la tige (64) du vérin d'ancrage (10) sont une seule et même pièce constituant les moyens de liaison du vérin d'ancrage (10) avec le vérin de puissance (9).

37. Dispositif selon la revendication 36, caractérisé en ce que le circuit hydraulique d'alimentation du vérin d'ancrage (10) est constitué par un canal (76) ménagé dans les tiges (59) du vérin de puissance (9) et (64) du vérin d'ancrage (10), de manière à relier directement la chambre (72) du vérin d'ancrage (10) à la chambre inférieure (61) du vérin de puissance (9).

38. Dispositif selon l'une quelconque des revendications 35 à 37, caractérisé en ce que les deux pistons (65) sont tenus sur la tige (64) par une collerette (67) et par une collerette d'extrémité (68) appartenant l'une et l'autre à cette tige (64), un ressort (66) repoussant les deux pistons (65) l'un par rapport à l'autre pour les maintenir en place, un piston (65) s'appliquant contre un appui (69) du corps (63) et l'autre piston (65) s'appliquant contre le bord (70) de ce corps (63).

39. Dispositif selon l'une quelconque des revendications 34 à 38, caractérisé en ce que les moyens d'accrochage comportent une articulation (74) raccordée d'une part à un élément (11) de la structure de l'hélicoptère, et d'autre part au fond (71) du corps (63) du vérin d'ancrage (10).

## Claims

1. Low-vulnerability device for the operation of a lifting and propulsing rotor of a helicopter by means of a cyclic plate mechanism mounted coaxially on the rotor drive shaft (6), in which the rotating plate is coupled by its peripheral part individually to a rod for controlling the pitch of each rotor blade, and in which the non-rotating plate (5) is coupled at four points (1, 2, 3, 4) regularly distributed around its periphery to four hydraulic actuating servocontrols each comprising a power jack (9), an anchoring system (10) and a servocontrol-distributor (41, 42), three of the servocontrols being used in normal working and the fourth being used as back-up in the event of a failure occurring on one of the other three,
characterized in that:
- each power jack (9) is supplied by a hydraulic circuit, independent of the hydraulic circuits of the other jacks (9), and comprises the servocontrol-distributor (41,42) operated by a mechanical input which is linked to the cockpit by a control linkage (13);
- each power jack (9) comprises a disengageable anchoring system;
- three of the servocontrol-distributors (41) are structurally arranged so as to be active in normal working and to block the anchoring system of each corresponding jack (9), and one servocontrol-distributor (42) is structurally arranged so as to be passive in normal working and to keep the anchoring system of the corresponding power jack (9) disengaged;
- each mechanical input of these four servocontrol-distributors (41,42) comprises a system which in the event of a certain force threshold being exceeded on one of the three normally active servocontrol-distributors (41), neutralizes this servocontrol-distributor and initiates the starting up of the normally inactive servocontrol-distributor (42) which then becomes operational in the safeguard working mode.

2. Device according to claim 1, characterized in that each servocontrol-distributor (41, 42) is incorporated in the corresponding power jack (9) so as to form a monoblock assemby (43,44) consisting of the body (45,46) of the servocontrol-distributor (41,42) and the body (47) of the power jack (9).

3. Device according to one of the preceding claims 1 or 2, characterized in that each servocontrol-distributor (41,42) comprises:
- a distribution assembly with a control loop between the position of the body (47) of the power jack (9) and the position of the corresponding mechanical input;
- a system for switching this control loop so as to place it in the opposite state to that corresponding to normal working of the control system of the non-rotating plate (5).

4. Device according to claim 3, characterized in that the control loop receives feedback information concerning the position of the body of the power jack (9), which acts directly on the position of the mechanical input mounted on the monoblock assembly (43,44) by means of a control system linked to the mechanical input, in such a way so that any change in the position of the mechanical input in relation to the monoblock assembly (43,44) in response to a pilot manoeuver causes displacement of the body (47) of the power piston (9), i.e. the displacement of monoblock assembly (43,44), until the mechanical input returns to its initial relative position in relation to this monoblock assembly (43,44).

5. Device according to claim 4, characterized in that the control loop is linked to the supply pressure of the corresponding independent hydraulic circuit, and in that the control system is connected to the fluid reservoir of this independent circuit.

6. Device according to one of claims 4 and 5, characterized in that the control system comprises an actuator valve (82,142) linked to the mechanical input.

7. Device according to any one of claims 3 to 6, characterized in that the power jack (9) has a differential section, and comprises a piston (58) with a rod (59) linked to the anchoring system, in such a way as to provide an upper chamber (60) and a lower chamber (61) on the side of the rod (59) and which are connected to the control loop, in such a way that when the power jack (9) operates, the lower chamber (61) is always connected to the pressurized hydraulic circuit.

8. Device according to claim 7, characterized in that the control loop switching system comprises:
- a by-pass valve (81,141) of the power jack (9) which is mounted in the control loop;
- a two position switching piston (85, 145);
- a switching distributor which acts on the switching piston (85, 145) to provide two positions:
. an initial position in which the switching piston (85,145) works with the by-pass valve (81,141) to obtain normal working of the servocontrol-distributor (41, 42) of the corresponding power jack (9);
. a back-up position in which the switching piston (85,145) works with the by-pass valve (81,141) to obtain safeguard working of the servocontrol-distributor (41,42) of the corresponding power jack (9).

9. Device according to claim 8, characterized in that the by-pass valve (81,141) is mounted on the supply channel (117,118; 177,178) of the control loop, and is connected to the fluid reservoir in such a way that this by-pass valve (81,141) has at least two positions:
- one position corresponding to the control loop without pressure,
- one working position of the servocontrol-distributor (41,42) corresponding to the control loop under pressure.

10. Device according to one of claims 8 and 9, characterized in that the switching piston (85,145) is locked in the back-up position by an additional lock (86,146).

11. Device according to any one of the preceding claims, characterized in that the mechanical input has a lock (51).

12. Device according to claims 8 and 11, characterized in that the by-pass valve (81,141) carries the lock (51) which acts on the mechanical input.

13. Device according to any one of claims 8 to 12, characterized in that the actuator valve (82, 142) and the switching distributor (83, 160) belong to the same part, i.e. the actuator lever (50) linked to the mechanical input made up of an input lever (49).

14. Device according to claim 13, characterized in that the actuator lever (50) comprises an elastic return system at the end facing the input lever (49).

15. Device according to claim 14, characterized in that the elastic return system comprises a compression spring (87) mounted between the body (45) of the servocontrol-distributor (41) and the end of the actuator lever (50).

16. Device according to claim 14, characterized in that the elastic return system comprises a compression spring (147) mounted on a rod (194) of the actuator lever (50) between two washers (193) arranged at each of its ends and held in position by a collar (195), one washer (193) pressing against a bearing face (189) on the body (46) of the servocontrol-distributor (42), and one washer (193) pressing against a bearing face (190) of this body (46).

17. Device according to any one of claims 13 and 14, characterized in that the mechanical input is formed by the input lever (49) which is mounted under the body (45,46) of the servocontrol-distributor (41,42) by means of an articulation (52) located at one of its ends, the other end receiving the input movement via the corresponding system, the actuator lever (50) being linked to the input lever (49) by an articulation (53) located between the movement input and the mounting articulation (52) of this input lever (49).

18. Device according to claim 17, characterized in that the input lever (49) works with two end stops: one upper end stop (56) and one lower end stop (57) which are integral with the body (45,46) of the servocontrol-distributor (41,42).

19. Device according to any one of claims 17 and 18, characterized in that the input lever (49) comprises a recessed hole (55) made in the upper side of the mounting articulation (52), this recessed hole (55) receiving the lock (51) carried by the by-pass valve which locks the input lever (49).

20. Device according to claim 19, characterized in that this recessed hole (55) and lock (51) have conjugate shapes in the form of a substantially truncated cone.

21. Device according to any one of claims 17 to 20, characterized in that the mounting articulation (52) of the input lever (49) is supported by two lugs (54) made under the body (45,46) of the servocontrol-distributor (41,42).

22. Device according to any one of claims 13 to 21, characterized in that the actuator lever (50) comprises a damper.

23. Device according to claim 21, characterized in that each of the three active servocontrol-distributors (41) when normally working comprises:
- an actuator valve (82) mounted on the actuator lever (50) and surrounded by an annular chamber (97) with a lower chamber (98) and an upper chamber (99) located each side of the actuator valve (82);
- a by-pass valve (81) with a rod (90) on which is mounted a spring (88) which presses on the one hand against this valve (81), and on the other hand against the body (45) and which is arranged in a chamber (93), the other end (107) of the by-pass valve (81) having a bevelled edge (92) which, under the action of the spring (88), comes into contact with the body (45), an annular chamber (94) being arranged around this valve and which has a channel (91) leading into the chamber (93);
- the control loop having a channel (111) which connects the upper chamber (60) of the power jack (9) to the annular chamber (94), which is itself connected by a channel (113) to the annular chamber (97) of the actuator valve, and a channel (112) connecting the lower chamber (61) of the power jack (9) to the by-pass valve (81) which is connected by a channel (114) to the lower chamber (98) of the actuator valve;
- a channel (118) connected to the supply of the hydraulic circuit and to the channel (117) which leads to the by-pass valve (81);
- a channel (116) connected to the return to the fluid reservoir leading to the upper chamber (99) of the actuator valve, said chamber being linked by a channel (115) to the chamber (93) of the by-pass valve (81);
- in such a way that when the hydraulic circuit is under pressure, the by-pass valve (81) moves as a result of the pressure in channel (117) to connect the lower chamber (61) of the power jack (9) to the lower chamber (98) of the actuator valve via the channels (112,114), which are thus connected to the pressurized channels (118) and (117) and in that in response to movement of the actuator lever (50), the actuator valve (82) moves so as to connect the upper chamber (60) of the jack (9) to either the lower chamber (98) or to the upper chamber (99) of the actuator (50) depending on the direction of movement of the lever, causing the body (47) of the jack to move until the actuator valve (82) returns to the balancing position.

24. Device according to claim 23, characterized in that each of the three active servocontrol-distributors (41) when normally working comprises:
- a switching valve (83) mounted on the actuator lever (50) with a lower chamber (101) and an upper chamber (102) located each side of the switching valve (83);
- a switching piston (85) mounted in the body (45) and in the continuation of the by-pass valve (81), in such a way that the spring (88) of this valve (81) bears against this piston (85);
- a channel (122) connecting the bottom of the switching piston (85) to the lower chamber (101) via channel (120), and to the upper chamber (102) via channel (121), a channel (119) connecting the switching valve (83) to the supply channel (118);
- in such a way that when the actuator lever (50) moves upwards or downwards by a value greater than the permitted value, it connects one of the chambers (101) and (102) to the channel (119) under pressure, the pressure then being sent via channel (122) to act on the switching piston (85) which moves to the back-up position and pushes back the by-pass valve (81) which then connects the chambers (60) and (61) of the power jack (9) to the return to the fluid reservoir (115,116), via the channels (112) and (114) which lead into channel (91) connected to the chamber (93), and via the channels (111) and (113) in which the annular chamber (94) is thus connected to the chamber (93).

25. Device according to claim 24, characterized in that the end of the switching piston (85) comprises a bevelled shoulder forming an end chamber (96).

26. Device according to any one of claims 24 and 25, characterized in that the additional lock (86) is mounted perpendicular to the axis of the switching piston (85), this additional lock (86) being pushed by a spring (89) in such a way as to engage in a groove (94) made in the switching piston (85).

27. Device according to claim 22 and any one of claims 23 to 26, characterized in that each of the three active servocontrol-distributors (41) when normally working comprises a damper valve (84) mounted on the actuator lever (50) with a collar (103) separating a lower chamber (105) from an upper chamber (106), both of these chambers being connected to the supply channel (118) via the branch on channel (119) of a channel (125) connected via channel (126) to the lower chamber (105) and via channel (127) to the upper chamber (106), the collar (103) having at least one throttling (104) linking the two chambers (105) and (106).

28. Device according to any one of claims 24 to 27, characterized in that each of the three active servocontrol-distributors (41) comprises a link channel (123) between the fluid reservoir return channel (115) and the supply channel (122) of the switching piston (85), this link channel (123) comprising a throttling (124).

29. Device according to claim 21, characterized in that the passive servocontrol-distributor (42) when normally working comprises:
- an actuator valve (142) mounted on the actuator lever (50) and surrounded by an annular chamber (157), with a lower chamber (158) and an upper chamber (159) located each side of the actuator valve (142);
- a by-pass valve (141) with a rod (150) on which a spring (148) is mounted which presses on the one hand against this valve (141) and on the other hand against the body (46), and which is arranged in a chamber (153), the other end (167) of the by-pass valve (141) having a bevelled edge (152) which, under the action of the spring (148), comes into contact with the body (46), an annular chamber (154) being arranged around this valve (141) which has a channel (151) leading into the chamber (153);
- the control loop having:
. a channel (171) which connects the upper chamber (60) of the jack (9) to the annular chamber (154) of the by-pass valve (141) which is itself connected via a channel (173) to the annular chamber (157) of the actuator valve;
. and a channel (172) connecting the lower chamber (61) of the jack (9) to the by-pass valve (141), which is connected via a channel (174) to the lower chamber (158) of the actuator valve;
- a channel (178) connected to the supply of the hydraulic circuit and to channel (177) which leads to the by-pass valve (141); a channel (176) connected to the fluid reservoir return and leading to the upper actuator chamber (159) which is connected via a channel (175) to the chamber (153) of the by-pass valve (141);
- in such a way that when the hydraulic circuit is under pressure, the by-pass valve (141) is moved by the pressure in the channel (177) while at the same time leaving the upper chamber (60) and lower chamber (61) of jack (9) connected to the return to the fluid reservoir, so that the passive servocontrol-distributor remains inoperative.

30. Device according to claim 29, characterized in that the passive servocontrol-distributor (42) when normally working comprises:
- a switching valve (143) mounted on the actuator lever (50) with a central chamber (161) and two lands: one lower land (160) and one upper land (162) located each side of this central chamber (161);
- a switching piston (145) mounted in the body (46) and in the continuation of the by-pass valve (141);
- a channel (182) connecting the bottom of the switching piston (145) via two channels (180) and (181) to the central chamber (161) of the switching valve (143) which is connected by a channel (179) to the pressurized supply channel (178), this pressure acting on the switching piston (145), to hold it in the initial lower position, a channel (184) being connected to channel (176) connected to the fluid reservoir return leading to the lower land (160) and a channel (188) connected to channel (184) leading to the upper land (162);
- in such a way that when the actuator lever (50) moves upwards or downwards by a value that exceeds the permitted value, it connects the central chamber (161) to one of the channels (184) and (188) connected to the fluid reservoir return, the switching piston (145) then being able to move under the action of the by-pass valve (141) pushed by the pressure to assume the back-up position, this by-pass valve (141) thus connecting the lower chamber (61) of the jack (9) and the lower chamber (158) of the actuator valve (142) via the channels (172) and (174) which are thus connected to the supply channel (178), and the by-pass valve (141) removes the link between the fluid reservoir return and the upper chamber (60), and the servocontrol-distributor (42) becomes operational.

31. Device according to claim 30, characterized in that the end of the switching piston (145) comprises a bevelled shoulder forming an end chamber (156).

32. Device according to any one of claims 30 and 31, characterized in that the additional lock (146) is mounted perpendicular to the axis of the switching piston (145), this additional lock (146) being pushed by a spring (149) in such a way as to engage in a groove (155) made in the switching piston (145).

33. Device according to claim 22 and any one of claims 29 to 32, characterized in that the passive servocontrol-distributor (42) when normally working comprises a damper valve (144) mounted on the actuator lever (50) with a collar (163) separating a lower chamber (165) from an upper chamber (166), both of these chambers being connected to the supply channel (178) via the branch on the channel (179) of a channel (185) connected via the channel (186) to the lower chamber (165) and via the channel (187) to the upper chamber (166), the collar (163) having at least one throttling (164) linking the two chambers (165) and (166).

34. Device according to any one of claims 7 to 33, characterized in that the anchoring system comprises an anchoring jack (10) with means of connecting to the power jack (9) and whose hydraulic circuit is connected to the lower chamber (61) of this power jack (9), the anchoring jack (10) being connected to a structural element (11) of the helicopter by anchoring means.

35. Device according to claim 34, characterized in that the anchoring jack (10) comprises a body (63) with a rod (64) carrying two pistons (65) which slide in the body (63) and which, together with the rod (64) and the body (63), determine a chamber (72).

36. Device according to claim 35, characterized in that the rod (59) of the power jack (9) and the rod (64) of the anchoring jack (10) are a single and same part constituting the means of connecting the anchoring jack (10) to the power jack (9).

37. Device according to claim 36, characterized in that the hydraulic supply circuit of the anchoring jack (10) is made up of a channel (76) made in the rods (59) of the power jack (9) and (64) of the anchoring jack (10), in such a way so as to directly link the chamber (72) of the anchoring jack (10) to the lower chamber (61) of the power jack (9).

38. Device according to any one of claims 35 to 37, characterized in that the two pistons (65) are held on the rod (64) by a collar (67) and by an end collar (68), both belonging to this rod (64), a spring (66) pushing back both pistons (65) in relation to one another to hold them in position, one piston (65) pressing against a bearing face (69) of the body (63) and the other piston (65) pressing against the edge (70) of this body (63).

39. Device according to any one of claims 34 to 38, characterized in that the means for coupling comprise an articulation (74) connected on the one hand to a structural element (11) of the helicopter and on the other hand to the bottom (71) of the body (63) of the anchoring jack (10).

## Patentansprüche

1. Vorrichtung mit verminderter Störanfälligkeit zur Steuerung eines Antriebs- und Tragrotors eines Hubschraubers mittels eines Mechanismus mit koaxial auf der Antriebswelle des Rotors (6) montierten Taumelscheiben, dessen umlaufende Scheibe mit ihrem peripheren Teil individuell mit einer Stange zur Steuerung der Steigung jedes Blatts des Rotors verbunden ist und dessen nicht umlaufende Scheibe (5) an vier Punkten (1, 2, 3, 4), die regelmäßig auf ihrem Umfang verteilt sind, an vier Druckölservosteuerungen zur Betätigung angekuppelt ist, die jeweils einen Arbeitszylinder (9), ein Verankerungssystem (10) und einen Servosteuerventilblock (41, 42) umfassen, wobei drei der Servosteuerungen im Normalbetrieb verwendet werden und die vierte im Notfall verwendet wird, falls eine der drei anderen versagt, dadurch gekennzeichnet, daß
- jeder Arbeitszylinder (9) von einem Hydraulikkreislauf gespeist wird, der von den Kreisläufen der anderen Zylinder (9) unabhängig ist und der den Servosteuerventilblock (41, 42) umfaßt, welcher durch einen mechanischen Eingang betätig wird und durch ein Lenkgestänge (13) mit dem Cockpit verbunden ist;
- jeder Arbeitszylinder (9) ein lösbares Verankerungssystem aufweist;
- drei der Servosteuerventilblöcke (41) eine Struktur aufweisen, die so beschaffen ist, daß sie im Normalbetrieb aktiv sind und das Verankerungssystem jedes entsprechenden Zylinders (9) blockiert wird, und ein Servosteuerventilblock (42) eine Struktur aufweist, die so beschaffen ist, daß er im Normalbetrieb passiv ist und das Verankerungssystem des entsprechenden Zylinders (9) gelöst bleibt;
- jeder der mechanischen Eingänge dieser vier Servosteuerventilblöcke (41, 42) ein System aufweist, das bei Überschreitung einer Belastungsschwelle bei einem der drei normalerweise aktiven Servosteuerventilblöcke (41) diesen Servosteuerventilblock ausschaltet und die Inbetriebnahme des normalerweise inaktiven Servosteuerventilblocks (42) einleitet, der im Notbetrieb zu arbeiten beginnt.

2. Vorrichtung nach Anspruch 1, dadurch gekennzeichnet, daß jeder Servosteuerventilblock (41, 42) in dem entsprechenden Arbeitszylinder (9) integriert ist, so daß eine Blockkonstruktion (43, 44) gebildet ist, die aus dem Körper (45, 46) des Servosteuerventilblocks (41, 42) und dem Körper (47) des Arbeitszylinders (9) besteht.

3. Vorrichtung nach einem der vorhergehenden Ansprüche 1 oder 2, dadurch gekennzeichnet, daß jeder Servosteuerventilblock (41, 42) umfaßt:
- ein Verteilersystem mit einem Regelkreis zwischen der Position des Körpers (47) des Arbeitszylinders (9) und der Position des entsprechenden mechanischen Eingangs;
- ein System zur Umschaltung dieses Regelkreises, um ihn in den Zustand zu versetzen, der dem des Normalbetriebs der Steuervorrichtung der nicht umlaufenden Scheibe (5) entgegengesetzt ist.

4. Vorrichtung nach Anspruch 3, dadurch gekennzeichnet, daß der Regelkreis die Rückführung der Information über die Position des Körpers des Arbeitszylinders (9) aufweist, welche mittels eines mit dem mechanischen Eingang verbundenen Steuerungssystems direkt auf die Position des an der Blockkonstruktion (43, 44) angebrachten mechanischen Eingangs einwirkt, so daß eine Veränderung der Position des mechanischen Eingangs in bezug auf die Blockkonstruktion (43, 44), die auf eine Betätigung durch den Piloten folgt, die Verschiebung des Körpers (47) des Arbeitszylinders (9), das heißt die Verschiebung der Blockkonstruktion (43, 44), bewirkt, bis sich der mechanische Eingang wieder in seiner anfänglichen Relativposition in bezug auf diese Blockkonstruktion (43, 44) befindet.

5. Vorrichtung nach Anspruch 4, dadurch gekennzeichnet, daß der Regelkreis mit dem Speisedruck des entsprechenden unabhängigen Hydraulikkreislaufs verbunden ist und daß das Steuerungssystem an den Speicherbehälter dieses unabhängigen Kreislaufs angeschlossen ist.

6. Vorrichtung nach einem der Ansprüche 4 und 5, dadurch gekennzeichnet, daß das Steuerungssystem einen mit dem mechanischen Eingang verbundenen Steuerschieber (82, 142) aufweist.

7. Vorrichtung nach einem der Ansprüche 3 bis 6, dadurch gekennzeichnet, daß der Arbeitszylinder von diffentiellem Querschnitt ist und einen Kolben (58) mit einer Stange (59), die mit dem Verankerungssystem verbunden ist, enthält, so daß er eine obere Kammer (60) und eine untere Kammer (61) neben der Stange (59) aufweist, die so an den Regelkreis angeschlossen sind, daß die untere Kammer (61) beim Betrieb des Arbeitszylinders (9) immer an den unter Druck stehenden Hydraulikkreislauf angeschlossen ist.

8. Vorrichtung nach Anspruch 7, dadurch gekennzeichnet, daß das System zur Umschaltung des Regelkreises umfaßt:
- einen Bypass-Schieber (81, 141) für den Arbeitszylinder (9), welcher in dem Regelkreis montiert ist;
- einen Umschaltkolben (85, 145) mit zwei Positionen;
- ein Umschaltventil, das auf den Umschaltkolben (85, 145) so einwirkt, daß er zwei Positionen aufweist:
. eine Anfangsposition, in welcher der Umschaltkolben (85, 145) mit dem Bypass-Schieber (81, 141) zusammenwirkt, um den Normalbetrieb des Servosteuerventilblocks (41, 42) des entsprechenden Arbeitszylinders (9) zu erzielen;
. eine Notfallposition, in welcher der Umschaltkolben (85, 145) mit dem Bypass-Schieber (81, 141) zusammenwirkt, um den Notbetrieb des Servosteuerventilblocks (41, 42) des ensprechenden Arbeitszylinders (9) zu erzielen.

9. Vorrichtung nach Anspruch 8, dadurch gekennzeichnet, daß der Bypass-Schieber (81, 141) auf dem Zuleitungskanal (117, 118, 177, 178) des Regelkreises montiert ist und so an den Speicherbehälter angeschlossen ist, daß dieser Bypass-Schieber (81, 141) mindestens zwei Positionen aufweist:
- eine Position, welche dem Regelkreis ohne Druck entspricht,
- eine Betriebsposition des Servosteuerventilblocks (41, 42), welche dem Regelkreis unter Druck entspricht.

10. Vorrichtung nach einem der Ansprüche 8 und 9, dadurch gekennzeichnet, daß der Umschaltkolben (85, 145) durch einen Hilfsriegel (86, 146) in der Notfallposition arretiert ist.

11. Vorrichtung nach einem der vorangehenden Ansprüche, dadurch gekennzeichnet, daß der mechanische Eingang mit einem Riegel (51) versehen ist.

12. Vorrichtung nach den Ansprüchen 8 und 11, dadurch gekennzeichnet, daß der Bypass-Schieber (81, 141) den auf den mechanischen Eingang wirkenden Riegel (51) trägt.

13. Vorrichtung nach einem der Ansprüche 8 bis 12, dadurch gekennzeichnet, daß der Steuerschieber (82, 142) und das Umschaltventil (83, 169) zum gleichen Teil gehören, das den Steuerhebel (50) darstellt, welcher mit dem mechanischen Eingang verbunden ist, der von einem Eingangshebel (49) gebildet ist.

14. Vorrichtung nach Anspruch 13, dadurch gekennzeichnet, daß der Steuerhebel (50) an dem Ende, das dem Eingangshebel (49) entgegengesetzt ist, ein elastisches Rückstellsystem aufweist.

15. Vorichtung nach Anspruch 14, dadurch gekennzeichnet, daß das elastische Rückstellsystem von einer Druckfeder (87) gebildet ist, die zwischen dem Körper (45) des Servosteuerventilblocks (41) und dem Ende des Steuerhebels (50) montiert ist.

16. Vorrichtung nach Anspruch 14, dadurch gekennzeichnet, daß das elastische Rückstellsystem von einer Druckfeder (147) gebildet ist, die auf einer Stange (194) des Steuerhebels (50) zwischen zwei Scheiben (193) montiert ist, die an jedem ihrer Enden angeordnet sind und von einem Flansch (195) gehalten werden, wobei eine Scheibe (193) auf einer Auflagefläche (190) dieses Körpers (46) aufliegt.

17. Vorrichtung nach einem der Ansprüche 13 und 14, dadurch gekennzeichnet, daß der mechanische Eingang von dem Eingangshebel (49) gebildet ist, der mittels eines Gelenks (52), das an einem seiner Enden angeordnet ist, unter dem Körper (45, 46) des Servosteuerventilblocks (41, 42) angebracht ist, wobei das andere Ende mittels des entsprechenden Systems die Eingangsbewegung empfängt, wobei der Steuerhebel (50) mit dem Eingangshebel (49) durch ein Gelenk (53) verbunden ist, das zwischen dem Bewegungseingang und dem Gelenk (52) zur Befestigung dieses Eingangshebels (49) angeordnet ist.

18. Vorrichtung nach Anspruch 17, dadurch gekennzeichnet, daß der Eingangshebel (49) mit zwei Anschlägen zusammenwirkt: einem oberen (56) und einem unteren Anschlag (57), die mit dem Körper (45, 46) des Servosteuerventilblocks (41, 42) einstückig sind.

19. Vorrichtung nach einem der Ansprüche 17 und 18, dadurch gekennzeichnet, daß der Eingangshebel (49) eine Aussparung (55) aufweist, die auf der oberen Seite des Befestigungsgelenks (52) vorgesehen ist, wobei diese Aussparung (55) den Riegel (51) aufnimmt, welcher von dem den Eingangshebel (49) blockierenden Bypass-Schieber getragen wird.

20. Vorrichtung nach Anspruch 19, dadurch gekennzeichnet, daß die Aussparung (55) und der Riegel (51) ein zueinander komplementäres Profil von im wesentlichen kegelstumpfartiger Form aufweisen.

21. Vorrichtung nach einem der Ansprüche 17 bis 20, dadurch gekennzeichnet, daß das Befestigungsgelenk (52) des Eingangshebels (49) von zwei Ohren (54) getragen wird, die unter dem Körper (45, 46) des Servosteuerventilblocks (41, 42) vorgesehen sind.

22. Vorrichtung nach einem der Ansprüche 13 bis 21, dadurch gekennzeichnet, daß der Steuerhebel (50) eine Dämpfungsvorrichtung aufweist.

23. Vorrichtung nach Anspruch 21, dadurch gekennzeichnet, daß jeder der drei aktiven Servosteuerventilblöcke (41) im Normalbetrieb aufweist:
- einen Steuerschieber (82), der auf dem Steuerhebel (50) angebracht ist und von einer ringförmigen Kammer (97) umgeben ist, wobei sich jeweils auf der einen und auf der anderen Seite des Steuerschiebers (82) eine untere Kammer (98) und eine obere Kammer (99) befindet;
- einen Bypass-Schieber (81) mit einer Stange (90), auf der eine Feder (88) montiert ist, die sich einerseits auf diesem Schieber (81) abstützt und anderseits auf dem Körper (45) und die in einer Kammer (93) angeordnet ist, wobei das andere Ende (107) des Bypass-Schiebers (81) eine Abschrägung (92) aufweist und mit dem Körper (45) unter der Wirkung der Feder (88) in Kontakt kommt, wobei eine ringförmige Kammer (94) um diesen Schieber angeordnet ist, der einen Kanal (91) aufweist, welcher in die Kammer (93) mündet;
den Regelkreis mit einem Kanal (111), der die obere Kammer (60) des Zylinders (9) mit der ringförmigen Kammer (94) verbindet, die ihrerseits durch einen Kanal (113) mit der ringförmigen Kammer (97) der Steuerung verbunden ist, und mit einem Kanal (112), der die untere Kammer (61) des Zylinders (9) mit dem Bypass-Schieber (81) verbindet, der durch einen Kanal (144) mit der unteren Kammer (98) der Steuerung verbunden ist;
- einen Kanal (118), der mit der Zufuhr des Hydraulikkreislaufs verbunden ist sowie mit dem Kanal (117), der am Bypass-Schieber (81) einmündet;
- einen Kanal (116), der mit dem Rücklauf zum Speicherbehälter verbunden ist, und in die obere Kammer (99) der Steuerung einmündet, die durch einen Kanal (113) mit der Kammer (93) des Bypass-Schiebers (81) verbunden ist;
so daß sich, wenn sich der Hydraulikkreislauf unter Druck befindet, der Bypass-Schieber (81) unter der Wirkung des Drucks des Kanals (117) verschiebt, um die untere Kammer (61) des Zylinders (9) mit der unteren Kammer (98) der Steuerung mittels der Kanäle (112, 114) zu verbinden, die dann mit den unter Druck befindlichen Kanälen (118) und (117) verbunden sind, und so daß sich der Steuerschieber (82) unter der Wirkung einer Bewegung des Steuerhebels (50) verschiebt, um die obere Kammer (60) des Zylinders (9) je nach der Bewegungsrichtung des Hebels mit der unteren Kammer (98) oder mit der oberen Kammer (99) der Steuerung (50) zu verbinden, damit sich der Körper (47) des Zylinders bis zur Rückkehr des Steuerschiebers (82) in die Gleichgewichtsposition verschiebt.

24. Vorrichtung nach Anspruch 23, dadurch gekennzeichnet, daß jeder der drei aktiven Servosteuerventilblöcke (41) im Normalbetrieb aufweist:
- einen Umschaltschieber (83), der auf dem Steuerhebel (50) angebracht ist, wobei sich jeweils auf der einen und auf der anderen Seite des Umschaltschiebers (83) eine untere Kammer (101) und eine obere Kammer (102) befindet;
- einen Umschaltkolben (85), der in dem Körper (45) und in Verlängerung des Bypass-Schiebers (81) derart montiert ist, daß sich die Feder (88) dieses Schiebers (81) auf diesem Kolben (85) abstützt;
- einen Kanal (122), der den Boden des Umschaltkolbens (85) mittels des Kanals (120) mit der unteren Kammer (101) und mittels des Kanals (121) mit der oberen Kammer (102) verbindet, einen Kanal (119), der den Umschaltschieber (83) mit dem Zufuhrkanal (118) verbindet:
so daß, wenn sich der Steuerhebel (50) um einen Wert nach oben oder nach unten verschiebt, der größer ist als der zulässige Wert, er eine der Kammern (101) und (102) mit dem unter Druck befindlichen Kanal (119) verbindet, dieser Druck dann in den Kanal (122) geleitet wird, um auf den Umschaltkolben (85) einzuwirken, der sich verschiebt, um sich in die Notfallposition zu begeben, und den Bypass-Schieber (81) zurückdrückt, welcher dann die Kammern (60) und (61) des Zylinders (9) mit dem Rücklauf zum Speicherbehälter (115, 116) verbindet, und zwar mittels der Kanäle (112) und (114), die dann in den mit der Kammer (93) verbundenen Kanal (91) einmünden, und mittels der Kanäle (111) und (113), deren ringförmige Kammer (94) dann mit der Kammer (93) verbunden ist.

25. Vorrichtung nach Anspruch 24, dadurch gekennzeichnet, daß das Ende des Umschaltkolbens (85) einen Versatz aufweist, der eine Endkammer (96) bildet.

26. Vorrichtung nach einem der Ansprüche 24 und 25, dadurch gekennzeichnet, daß der Hilfsriegel (86) senkrecht zur Achse des Umschaltkolbens (85) montiert ist, wobei dieser Hilfsriegel (86) so durch eine Feder (89) gedrückt wird, daß er sich in einer in dem Umschaltkolben (85) vorgesehenen Rille (95) anordnen kann.

27. Vorrichtung nach Anspruch 22 und nach einem der Ansprüche 23 bis 26, dadurch gekennzeichnet, daß jeder der drei aktiven Servosteuerventilblöcke (41) im Normalbetrieb einen Dämpfungsschieber (84) aufweist, der auf dem Steuerhebel (50) angebracht ist und einen Kragen (103) aufweist, der eine untere Kammer (105) von einer oberen Kammer (106) trennt, die beide an den Zufuhrkanal (118) angeschlossen sind, und zwar durch den Anschluß an den Kanal (119) eines Kanals (125), der mittels des Kanals (126) mit der unteren Kammer (105) und mittels des Kanals (127) mit der oberen Kammer (106) verbunden ist, wobei der Kragen (103) mindestens eine Einschnürung (104) aufweist, welche die beiden Kammern (105) und (106) verbindet.

28. Vorrichtung nach einem der Ansprüche 24 bis 27, dadurch gekennzeichnet, daß jeder der drei aktiven Servosteuerventilblökke (41) einen Verbindungskanal (123) zwischen dem Rücklaufkanal (115) zum Speicherbehälter und dem Zufuhrkanal (122) zum Umschaltkolben (85) aufweist, wobei dieser Verbindungskanal (123) eine Einschnürung (124) aufweist.

29. Vorrichtung nach Anspruch 21, dadurch gekennzeichnet, daß der passive Servosteuerventilblock (42) im Normalbetrieb aufweist:
- einen Steuerschieber (142), der auf dem Steuerhebel (50) angebracht ist und von einer ringförmigen Kammer (157) umgeben ist, wobei sich jeweils auf der einen und auf der anderen Seite des Steuerschiebers (142) eine untere Kammer (158) und eine obere Kammer (159) befindet;
- einen Bypass-Schieber (141) mit einer Stange (150), auf der eine Feder (148) montiert ist, die sich einerseits auf diesem Schieber (141) abstützt und andererseits auf dem Körper (46) und die in einer Kammer (153) angeordnet ist, wobei das andere Ende (167) des Bypass-Schiebers (141) eine Abschrägung (152) aufweist und mit dem Körper (46) unter der Wirkung der Feder (148) in Kontakt kommt, wobei eine ringförmige Kammer (154) um diesen Schieber (141) angeordnet ist, der einen Kanal (151) aufweist, welcher in die Kammer (153) mündet;
- den Regelkreis mit:
. einem Kanal (171), der die obere Kammer (60) des Zylinders (9) mit der ringförmigen Kammer (154) des Bypass-Schiebers (141) verbindet, die ihrerseits durch einen Kanal (173) mit der ringförmigen Steuerungskammer (157) verbunden ist;
. und einem Kanal (172), der die untere Kammer (61) des Zylinders (9) mit dem Bypass-Schieber (141) verbindet, der durch einen Kanal (174) mit der unteren Kammer (158) der Steuerung verbunden ist;
- einen Kanal (178), der mit der Zufuhr des Hydraulikkreislaufs verbunden ist sowie mit dem Kanal (177), der am Bypass-Schieber (141) einmündet;
- einen Kanal (176), der mit dem Rücklauf zum Speicherbehälter verbunden ist und in die obere Kammer (159) der Steuerung einmündet, die durch einen Kanal (175) mit der Kammer (153) des Bypass-Schiebers (141) verbunden ist;
so daß sich, wenn sich der Hydraulikkreislauf unter Druck befindet, der Bypass-Schieber (141) unter der Wirkung des Drucks des Kanals (177) verschiebt, wobei er die obere Kammer (60) und die untere Kammer (61) des Zylinders (9) mit dem Rücklauf zum Speicherbehälter verbunden läßt, damit der passive Servosteuerventilblock (42) wirkungslos bleibt.

30. Vorrichtung nach Anspruch 29, dadurch gekennzeichnet, daß der passive Servosteuerventilblock (42) im Normalbetrieb aufweist:
- einen Umschaltschieber (143), der auf dem Steuerhebel (50) angebracht ist, mit einer zentralen Kammer (161) und zwei auskragenden Bereichen: einem unteren auskragenden Bereich (160) und einem oberen auskragendem Bereich (162), die sich jeweils auf der einen und auf der anderen Seite dieser zentralen Kammer (161) befinden;
- einen Umschaltkolben (145), der in dem Körper (46) und in Verlängerung des Bypass-Schiebers (141) montiert ist;
- einen Kanal (182), der den Boden des Umschaltkolbens (145) mittels der Kanäle (180) und (181) mit der zentralen Kammer (161) des Umschaltschiebers (143) verbindet, die durch einen Kanal (179) mit dem unter Druck stehenden Zufuhrkanal (178) verbunden ist, wobei der Druck auf den Umschaltkolben (145) einwirkt, um ihn in der anfänglichen unteren Position zu halten, einen Kanal (184), der an den mit dem Rücklauf zum Speicherbehälter verbundenen Kanal (176) angeschlossen ist und am unteren auskragenden Bereich (160) einmündet, und einen Kanal (188), der an den Kanal (184) angeschlossen ist und am oberen auskragenden Bereich (162) einmündet;
so daß, wenn sich der Steuerhebel (50) um einen Wert nach oben oder nach unten verschiebt, der größer ist als der zulässige Wert, er die zentrale Kammer (161) mit einem der mit dem Rücklauf zum Speicherbehälter verbundenen Kanäle (184) und (188) verbindet, sich der Umschaltkolben (145) dann unter der Wirkung des durch den Druck bewegten Bypass-Schiebers (141) verschiebt, um sich in die Notfallposition zu begeben, dieser Bypass-Schieber (141) infolgedessen die untere Kammer (61) des Zylinders (9) mit der unteren Kammer (158) des Steuerschiebers (142) verbindet, und zwar durch die Kanäle (172) und (174), die auf diese Weise mit dem Zufuhrkanal (178) verbunden werden, und der Bypass-Schieber (141) die Verbindung der oberen Kammer (60) mit dem Rücklauf zum Speichergefäß unterbricht und der passive Servosteuerventilblock (42) einsatzbereit wird.

31. Vorrichtung nach Anspruch 30, dadurch gekennzeichnet, daß das Ende des Umschaltkolbens (145) einen Versatz aufweist, der eine Endkammer (156) bildet.

32. Vorrichtung nach einem der Ansprüche 30 und 31, dadurch gekennzeichnet, daß der Hilfsriegel (146) senkrecht zur Achse des Umschaltkolbens (145) montiert ist, wobei dieser Hilfsriegel (146) so durch eine Feder (149) gedrückt wird, daß er sich in einer in dem Umschaltkolben (145) vorgesehenen Rille (155) anordnen kann.

33. Vorrichtung nach Anspruch 22 und nach einem der Ansprüche 29 bis 32, dadurch gekennzeichnet, daß der passive Servosteuerventilblock (42) im Normalbetrieb einen Dämpfungsschieber (144) aufweist, der auf dem Steuerhebel (50) angebracht ist und einen Kragen (163) aufweist, der eine untere Kammer (165) von einer oberen Kammer (166) trennt, die beide an den Zufuhrkanal (178) angeschlossen sind, und zwar durch den Anschluß an den Kanal (179) eines Kanals (185), der mittels des Kanals (186) mit der unteren Kammer (165) und mittels des Kanals (187) mit der oberen Kammer (166) verbunden ist, wobei der Kragen (163) mindestens eine Einschnürung (164) aufweist, welche die beiden Kammern (165) und (166) verbindet.

34. Vorrichtung nach einem der Ansprüche 7 bis 33, dadurch gekennzeichnet, daß das Verankerungssystems einen Verankerungszylinder (10) umfaßt, der Mittel zur Verbindung mit dem Arbeitszylinder (9) aufweist und dessen Hydraulikkreislauf mit der unteren Kammer (61) dieses Arbeitszylinders (9) verbunden ist, wobei der Verankerungszylinder (10) durch Befestigungsmittel mit einem Element (11) der Hubschrauberstruktur verbunden ist.

35. Vorrichtung nach Anspruch 34, dadurch gekennzeichnet, daß der Verankerungszylinder (10) einen Körper (63) mit einer Stange (64) aufweist, die zwei Kolben (65) trägt, welche in dem Körper (63) gleiten und mit der Stange (64) und dem Körper (63) eine Kammer (72) definieren.

36. Vorrichtung nach Anspruch 35, dadurch gekennzeichnet, daß die Stange (59) des Arbeitszylinders (9) und die Stange (64) des Verankerungszylinders (10) ein und dasselbe Teil sind, das die Mittel zur Verbindung des Verankerungszylinders (10) mit dem Arbeitszylinder (9) bildet.

37. Vorrichtung nach Anspruch 36, dadurch gekennzeichnet, daß der Speisehydraulikkreislauf der Verankerungszylinders (10) von einem Kanal (76) gebildet ist, der in den Stangen (59) des Arbeitszylinders (9) und (64) des Verankerungszylinders (10) so vorgesehen ist, daß er die Kammer (72) des Verankerungszylinders (10) direkt mit der unteren Kammer (61) des Arbeitszylinders (9) verbindet.

38. Vorrichtung nach einem der Ansprüche 35 bis 37, dadurch gekennzeichnet, daß die zwei Kolben (65) durch einen Kragen (67) und durch einen Endflansch (68) auf der Stange (64) gehalten werden, die beide zu dieser Stange (64) gehören, wobei eine Feder (66) die zwei Kolben (65) aufeinanderschiebt, um sie an ihrem Platz zu halten, wobei sich ein Kolben (65) an einer Auflagefläche (69) des Körpers (63) abstützt und sich der andere Kolben (65) an dem Rand (70) dieses Körpers (63) abstützt.

39. Vorrichtung nach einem der Ansprüche 34 bis 38, dadurch gekennzeichnet, daß die Befestigungsmittel ein Gelenk (74) umfassen, das einerseits mit einem Element (11) der Hubschrauberstruktur und andererseits mit dem Boden (71) des Körpers (63) des Verankerungszylinders (10) verbunden ist.
